# EUROPEAN PATENT APPLICATION

(11) **EP 4 800 058 A1**
(43) Date of publication of application: **02.09.2026**
(21) Application number: 25386012.6
(22) Date of filing: 26.02.2025
(51) Int. Cl.: C08K 5/01, C08K 3/04, C08L 23/14, C08F 2/00, C08F 210/06

(54) **POWER CABLE**

(71) Applicant: Borealis GmbH, 1020 Vienna (AT)
(72) Inventor: Klimke, Katja Ellen, 4021 Linz (AT); Hagstrand, Per-Ola, 444 86 Stenungsund (SE); Nilsson, Ulf, 444 86 Stenungsund (SE); Gkourmpis, Thomas, 444 86 Stenungsund (SE); Efraimsson, Lars, 444 86 Stenungsund (SE); Johansson, Anette, 444 86 Stenungsund (SE)
(74) Representative: Maiwald GmbH

(57) **Abstract**

The present invention relates to a power cable comprising a conductor, an inner semiconductive layer, an insulation layer and an outer semiconductive layer, obtainable by a process comprising the steps of a) preparing a semiconductive polypropylene composition (S-PP), which comprises a first heterophasic copolymer of propylene and ethylene (HECO1), carbon black and a dielectric fluid comprising at least one alkylaryl hydrocarbon, b) preparing a polypropylene composition (I-PP), which comprises a second heterophasic copolymer of propylene and ethylene (HECO2) and is free of a dielectric fluid, c) coating the conductor with an inner semiconductive layer comprising the semiconductive polypropylene composition (S-PP); d) coating the inner semiconductive layer with an insulation layer comprising the polypropylene composition (I-PP), and e) coating the insulation layer with an outer semiconductive layer comprising the semiconductive polypropylene composition (S-PP),
a process for producing the power cable, and
the use of the dielectric fluid comprising at least one alkylaryl hydrocarbon in the semiconductive composition (S-PP) for increasing the Weibull alpha-value of the power cable to a value of at least 35 kV/mm.

## Description

The present invention relates to a power cable comprising a conductor, an inner semiconductive layer, an insulation layer and an outer semiconductive layer, obtainable by a process comprising the steps of a) preparing a semiconductive polypropylene composition (S-PP), which comprises a first heterophasic copolymer of propylene and ethylene (HECO1), carbon black and a dielectric fluid comprising at least one alkylaryl hydrocarbon, b) preparing a polypropylene composition (I-PP), which comprises a second heterophasic copolymer of propylene and ethylene (HECO2) and is free of a dielectric fluid, c) coating the conductor with an inner semiconductive layer comprising the semiconductive polypropylene composition (S-PP); d) coating the inner semiconductive layer with an insulation layer comprising the polypropylene composition (I-PP), and e) coating the insulation layer with an outer semiconductive layer comprising the semiconductive polypropylene composition (S-PP), a process for producing the power cable, and the use of the dielectric fluid comprising at least one alkylaryl hydrocarbon in the semiconductive composition (S-PP) for increasing the Weibull alpha-value of the power cable to a value of at least 35 kV/mm.

### Technical background

Power cables for medium, high and extra high voltage (MV, HV and EHV) cables are generally composed of an electric conductor, which is surrounded by different layers which include an inner semiconductive layer, an insulation layer, an outer semiconductive layer and optionally one or more outer layers, such as a jacketing layer. For both the semiconductive layer and the insulation layer as polymeric component crosslinked polyethylene resins have been generally used due to their durability in the presence of strong electrical fields.

However, due to its crosslinking the XLPE have thermosetting properties.

Lately, attempts were made to use thermoplastic material and especially thermoplastic propylene polymers as polymeric material for semiconductive layers and insulation layers in medium, high and extra high voltage (MV, HV and EHV) cables. Further, transmission system operators are expressing an increasing interest for recycling cable components at end-of-life.

WO 2022/122444 discloses a semiconductive composition for semiconductive layers comprising a heterophasic propylene copolymer as polymeric component, which shows good conductivity, good mechanical properties and low water tree formation in the presence of a rather low amount of carbon black.

WO 2022/200395 A1 discloses a polypropylene composition for insulation layers comprising a heterophasic propylene copolymer as polymeric component, which shows good electric breakdown strength.

For further improving the electrical properties of power cables it is well established in the art to introduce dielectric fluids into the different layers of the power cables, which fill up the spaces or holes in the layers and prevent partial discharges. However, for achieving a high electrical performance the thermoplastic polymer compositions especially for insulating layers should be as clean as possible without morphological defects and hence comprise as few components as possible and are prepared with as few process steps as possible. In this regard the additional process steps of adding dielectric fluids in the thermoplastic polymer compositions for insulation layers of power cables, are preferably avoided.

Thus, there is a need in the art for providing power cables based on thermoplastic polymers like polypropylene in the semiconductive layers and the insulation layer, which show improved electric performance.

It has surprisingly been found that by introducing a dielectric fluid comprising at least one alkylaryl hydrocarbon only into the semiconductive composition for the inner and outer semiconductive layer and not introducing any dielectric fluid into the polypropylene composition for the insulation layer a power cable with an improved electric breakdown strength can be provided.

The power cable further shows good mechanical properties and is fully recyclable.

### Summary of the invention

In a first aspect the present invention relates to a power cable comprising a conductor, an inner semiconductive layer, an insulation layer and an outer semiconductive layer, obtainable by a process comprising the following steps:
a) preparing a semiconductive polypropylene composition (S-PP), which comprises from 45.0 to 80.0 wt.-%, preferably from 50.0 to 75.0 wt.-%, more preferably from 55.0 to 70.0 wt.-%, of a first heterophasic copolymer of propylene and ethylene (HECO1) having
   - a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
   - a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the heterophasic copolymer of propylene and ethylene (HECO1), wherein
   - said xylene cold soluble (XCS) fraction has an intrinsic viscosity of from 100 to 350 cm³/g, preferably from 130 to 325 cm³/g, most preferably from 150 to 300 cm³/g, measured according to ISO 1628-3 at 135°C in decalin;

   from 5.0 to 40.0 wt.-%, preferably from 10.0 to 37.5 wt.-%, more preferably from 15.0 to 35.0 wt.-%, of carbon black; and
   from 1.0 to 15.0 wt.-%, preferably from 2.5 to 12.5 wt.-%, more preferably from 3.5 to 10.0 wt.-%, of a dielectric fluid comprising at least one alkylaryl hydrocarbon having the structural formula (I) 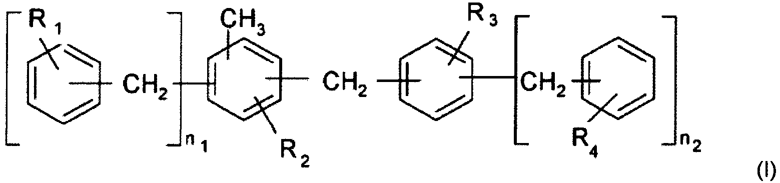 wherein
      R₁, R₂, R₃ and R₄, equal or different are independently hydrogen or methyl;
      n₁ and n₂, equal or different, are 0, 1 or 2, with the proviso that the sum n₁ + n₂ is less than or equal to 3;
      wherein all weight percentages are based on the total weight of the semiconductive composition (S-PP);
b) preparing a polypropylene composition (I-PP), which comprises a second heterophasic copolymer of propylene and ethylene (HECO2), wherein the polypropylene composition (I-PP) has
   - a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
   - a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), wherein
   - said xylene cold soluble (XCS) fraction has an ethylene content, determined by quantitative ¹³C{¹H} nuclear-magnetic resonance (NMR) spectroscopy, of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction;
   characterized in that the polypropylene composition (I-PP) is free of a dielectric fluid;
c) coating the conductor with an inner semiconductive layer comprising the semiconductive polypropylene composition (S-PP);
d) coating the inner semiconductive layer with an insulation layer comprising the polypropylene composition (I-PP); and
e) coating the insulation layer with an outer semiconductive layer comprising the semiconductive polypropylene composition (S-PP).

In a second aspect the present invention relates to a process for producing a power cable comprising the following steps:
a) preparing a semiconductive polypropylene composition (S-PP), which comprises from 45.0 to 80.0 wt.-%, preferably from 50.0 to 75.0 wt.-%, more preferably from 55.0 to 70.0 wt.-%, of a first heterophasic copolymer of propylene and ethylene (HECO1) having
   - a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
   - a xylene cold soluble (XCS) fraction, determined according to the ISO 16152, in a total amount of from 25.0 to 50.0 wt%, preferably from 30.0 to 47.5 wt%, most preferably from 32.5 to 45.0 wt%, based on the total weight amount of the heterophasic copolymer of propylene and ethylene (HECO1), wherein
   - said xylene cold soluble (XCS) fraction has an intrinsic viscosity of from 100 to 350 cm³/g, preferably from 130 to 325 cm³/g, most preferably from 150 to 300 cm³/g, measured according to ISO 1628-3 at 135°C in decalin;

   from 5.0 to 40.0 wt.-%, preferably from 10.0 to 37.5 wt.-%, more preferably from 15.0 to 35.0 wt.-%, of carbon black; and
   from 1.0 to 15.0 wt.-%, preferably from 2.5 to 12.5 wt.-%, more preferably from 3.5 to 10.0 wt.-%, of a dielectric fluid comprising at least one alkylaryl hydrocarbon having the structural formula (I) 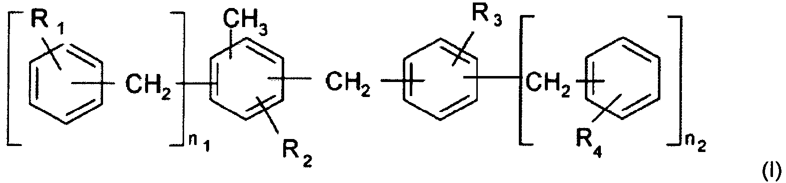 wherein
      R₁, R₂, R₃ and R₄, equal or different are independently hydrogen or methyl;
      n₁ and n₂, equal or different, are 0, 1 or 2, with the proviso that the sum n₁ + n₂ is less than or equal to 3;
      wherein all weight percentages are based on the total weight of the semiconductive composition (S-PP);
b) preparing a polypropylene composition (I-PP), which comprises a second heterophasic copolymer of propylene and ethylene (HECO2), wherein the polypropylene composition (I-PP) has
   - a melt a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
   - a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), wherein
   - said xylene cold soluble (XCS) fraction has an ethylene content, determined by quantitative ¹³C{¹H} nuclear-magnetic resonance (NMR) spectroscopy, of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction;
   characterized in that the polypropylene composition (I-PP) is free of a dielectric fluid;
c) coating the conductor with an inner semiconductive layer comprising the semiconductive polypropylene composition (S-PP);
d) coating the inner semiconductive layer with an insulation layer comprising the polypropylene composition (I-PP); and
e) coating the insulation layer with an outer semiconductive layer comprising the semiconductive polypropylene composition (S-PP).

In a third aspect the present invention relates to the use of a dielectric fluid comprising at least one alkylaryl hydrocarbon having the structural formula (I) 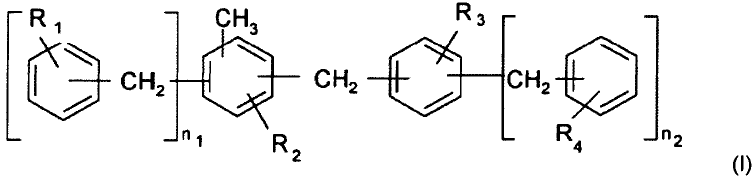 wherein
R₁, R₂, R₃ and R₄, equal or different, are independently hydrogen or methyl;
n₁ and n₂, equal or different, are 0, 1 or 2, with the proviso that the sum n₁ + n₂ is less than or equal to 3,
in the semiconductive composition (S-PP) for increasing the Weibull alpha-value of the power cable as described above or below to a value of at least 35 kV/mm, such as from 35.0 to 65.0 kV/mm, preferably from 40.0 to 65.0 kV/mm and most preferably from 45.0 to 65.0 kV/mm, measured in agreement with CENELEC HD 605 5.4.15.3.4 for 6/10 kV cables on a 10 kV cable.

### Definitions

A heterophasic polypropylene is a propylene-based copolymer with a crystalline matrix phase, which can be a propylene homopolymer or a random copolymer of propylene and at least one alpha-olefin comonomer, and an elastomeric phase dispersed therein. The elastomeric phase can be a propylene copolymer with a high amount of comonomer, which is not randomly distributed in the polymer chain but are distributed in a comonomer-rich block structure and a propylene-rich block structure.

A heterophasic polypropylene usually differentiates from a one-phasic propylene copolymer in that it shows two distinct glass transition temperatures Tg which are attributed to the matrix phase and the elastomeric phase respectively.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

A propylene random copolymer is a copolymer of propylene monomer units and comonomer units in which the comonomer units are distributed randomly over the polypropylene chain. Thereby, a propylene random copolymer includes a fraction, which is insoluble in xylene - xylene cold soluble (XCI fraction - in an amount of more than 85 wt.-%, such as of at least 88 wt.-%, most preferably of at least 90 wt.-%, based on the total amount of propylene random copolymer. Accordingly, the propylene random copolymer does not contain an elastomeric polymer phase dispersed therein.

Usually, a propylene polymer comprising at least two propylene polymer fractions (components), which have been produced under different polymerization conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal propylene polymer, a propylene polymer consisting of two fractions only is called "bimodal", whereas a propylene polymer consisting of three fractions only is called "trimodal".

A unimodal propylene polymer only consists of one fraction.

Thereby, the term "different" means that the propylene polymer fractions differ from each other in at least one property, preferably in the weight average molecular weight - which can also be measured in different melt flow rates of the fractions - or comonomer content or both.

Vis-breaking is a post reactor chemical process for modifying semi-crystalline polymers such as propylene polymers. During the vis-breaking process, the propylene polymer backbone is degraded by means of peroxides, such as organic peroxides, via beta scission. The degradation is generally used for increasing the melt flow rate and narrowing the molecular weight distribution.

In the following amounts are given in % by weight (wt.-%) unless it is stated otherwise.

### Detailed description of the invention

### Power cable

The power cable comprises a conductor, an inner semiconductive layer, an insulation layer and an outer semiconductive layer.

The inner semiconductive layer preferably comprises the semiconductive composition (S-PP) as described above or below in an amount of from 90 to 100 wt.-%, more preferably from 95 to 100 wt.-%, still more preferably from 99 to 100 wt.-%, based on the total weight of the inner semiconductive layer, most preferably consists of the semiconductive composition (S-PP).

The outer semiconductive layer preferably comprises the semiconductive composition (S-PP) as described above or below in an amount of from 90 to 100 wt.-%, more preferably from 95 to 100 wt.-%, still more preferably from 99 to 100 wt.-%, based on the total weight of the outer semiconductive layer, most preferably consists of the semiconductive composition (S-PP).

The semiconductive composition (S-PP) of the inner semiconductive layer and the semiconductive composition (S-PP) of the outer semiconductive layer can be the same or different within the scope of the semiconductive composition (S-PP) as described above or below.

It is preferred that the semiconductive composition (S-PP) of the inner semiconductive layer is the same as the semiconductive composition (S-PP) of the outer semiconductive layer.

The insulation layer preferably comprises the polypropylene composition (I-PP) as described above or below in an amount of from 90 to 100 wt.-%, more preferably from 95 to 100 wt.-%, still more preferably from 99 to 100 wt.-%, based on the total weight of the insulation layer, most preferably consists of the polypropylene composition (I-PP).

The term "conductor" means herein above and below that the conductor comprises one or more wires. The wire can be for any use and be e.g. optical, telecommunication or electrical wire. Moreover, the power cable may comprise one or more such conductors. Preferably the conductor is an electrical conductor and comprises one or more metal wires. A power cable is defined to be a cable transferring energy operating at any voltage, typically operating at voltages higher than 1 kV. The voltage applied to the power cable can be alternating (AC), direct (DC), or transient (impulse). The power cables according to the invention preferably operate at voltages 6 kV to 36 kV (medium voltage (MV) cables). The terms have well known meanings and indicate the operating level of such cables.

The power cable comprises a conductor and is prepared by surrounding the conductor by at least an inner semiconductive layer, an insulation layer and an outer semiconductive layer, in that order, wherein, the inner and outer semiconductive layers independently comprise, preferably consist of said semiconductive composition (S-PP) as described above or below and the insulation layer comprise, preferably consist(s) of said polypropylene composition (I-PP) as described above or below.

In a preferred embodiment the present invention relates to a power cable comprising a conductor, an inner semiconductive layer, an insulation layer and an outer semiconductive layer, wherein the conductor is coated with the inner semiconductive layer comprising a semiconductive polypropylene composition (S-PP), the inner semiconductive layer is coated with the insulation layer comprising a polypropylene composition (I-PP), and the insulation layer is coated with the outer semiconductive layer comprising the semiconductive polypropylene composition (S-PP), wherein the semiconductive polypropylene composition (S-PP) comprises from 45.0 to 80.0 wt.-%, preferably from 50.0 to 75.0 wt.-%, more preferably from 55.0 to 70.0 wt.-%, of a first heterophasic copolymer of propylene and ethylene (HECO1) having
- a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
- a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the heterophasic copolymer of propylene and ethylene (HECO1), wherein
- said xylene cold soluble (XCS) fraction has an intrinsic viscosity of from 100 to 350 cm³/g, preferably from 130 to 325 cm³/g, most preferably from 150 to 300 cm³/g, measured according to ISO 1628-3 at 135°C in decalin;
   from 5.0 to 40.0 wt.-%, preferably from 10.0 to 37.5 wt.-%, more preferably from 15.0 to 35.0 wt.-%, of carbon black; and
   from 1.0 to 15.0 wt.-%, preferably from 2.5 to 12.5 wt.-%, more preferably from 3.5 to 10.0 wt.-%, of a dielectric fluid comprising at least one alkylaryl hydrocarbon having the structural formula (I) 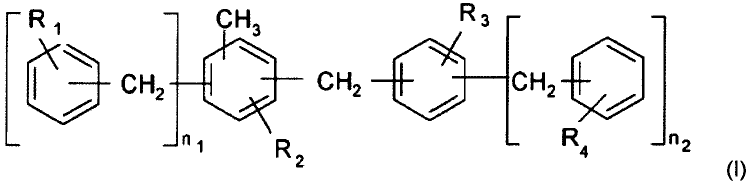 wherein
      R₁, R₂, R₃ and R₄, equal or different are independently hydrogen or methyl;
      n₁ and n₂, equal or different, are 0, 1 or 2, with the proviso that the sum n₁ + n₂ is less than or equal to 3;
      wherein all weight percentages are based on the total weight of the semiconductive composition (S-PP); and
      the polypropylene composition (I-PP) comprises a second heterophasic copolymer of propylene and ethylene (HECO2), wherein the polypropylene composition (I-PP) has
- a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
- a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), wherein
- said xylene cold soluble (XCS) fraction has an ethylene content, determined by quantitative ¹³C{¹H} nuclear-magnetic resonance (NMR) spectroscopy, of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction;
   characterized in that the polypropylene composition (I-PP) is free of a dielectric fluid.

Preferably, the power cable is a medium voltage power cable or a high voltage power cable.

Moreover the outer semiconductive layer can be strippable (peelable) or bonded (not peeled off), preferably bonded, which terms have a well known meaning.

As well known the power cable can optionally comprise further layers, e.g. layers surrounding the insulation layer or, if present, the outer semiconductive layers, such as screen(s), a jacketing layer(s), other protective layer(s) or any combinations thereof.

The power cable shows good electrical properties in form of good electrical properties represented by high Weibull alpha and high Weibull beta values when performing a Weibull analysis on a series of AC electrical breakdown results.

The power cable preferably has a Weibull alpha-value of at least 35.0 kV/mm, more preferably at least 40.0 kV/mm, still more preferably at least 45.0 kV/mm, even more preferably at least 46.0 kV/mm, yet more preferably at least 47.0 kV/mm and most preferably at least 48.0 kV/mm, when measured on a 10 kV cable in agreement with CENELEC HD 605 5.4.15.3.4 for 6/10 kV cables.

The upper limit of the Weibull alpha-value is usually not more than 65.0 kV/mm, when measured on a 10 kV cable in agreement with CENELEC HD 605 5.4.15.3.4 for 6/10 kV cables.

Still further, the power cable preferably has a Weibull beta-value of at least 7.5, more preferably of at least 8.0, still more preferably of at least 8.2, when measured on a 10 kV cable in agreement with CENELEC HD 605 5.4.15.3.4 for 6/10 kV cables.

The upper limit of the Weibull beta-value is usually not more than 250.0, when measured on a 10 kV cable in agreement with CENELEC HD 605 5.4.15.3.4 for 6/10 kV cables.

It has been found that the power cable of the present invention in which the semiconductive composition (S-PP) of the inner and outer semiconductive layers comprises a dielectric fluid comprising at least one alkylaryl hydrocarbon having the structural formula (I) as described above or below shows a Weibull-alpha value which is at least 2 kV/mm, such as from 2 to 5 kV/mm, preferably from about 3 kV/mm, compared to a power cable of the same composition in which the semiconductive composition (S-PP) of the inner and outer semiconductive layers does not comprise a dielectric fluid comprising at least one alkylaryl hydrocarbon having the structural formula (I) as described above or below, when determined in agreement with CENELEC HD 605 5.4.15.3.4 for 6/10 kV cables on a 10 kV cable.. Surprisingly the improved Weibull-alpha value is obtained without introducing a dielectric fluid into the polypropylene composition of the insulation layer.

### Semiconductive composition (S-PP)

The semiconductive compostion (S-PP) comprises
from 45.0 to 80.0 wt.-%, preferably from 50.0 to 75.0 wt.-%, more preferably from 55.0 to 70.0 wt.-% of a first heterophasic copolymer of propylene and ethylene (HECO1)
from 5.0 to 40.0 wt.-%, preferably from 10.0 to 37.5 wt.-%, more preferably from 15.0 to 35.0 wt.-% carbon black; and
from 1.0 to 15.0 wt.-%, preferably from 2.5 to 12.5 wt.-%, more preferably from 3.5 to 10.0 wt.-% of a dielectric fluid comprising at least one alkylaryl hydrocarbon;
wherein all weight percentages are based on the total weight of the semiconductive composition (S-PP).

The semiconductive composition (S-PP) comprises HECO1, carbon black and the dielectic fluid as described above or below.

The overall amount of HECO1, carbon black and the dielectic fluid in the semiconductive composition (S-PP) is preferably in the range of from 90.0 to 100 wt.-%, preferably from 95.0 to 100 wt.-%, more preferably 97.5 to 100 wt.-%, based on the total weight of the semiconductive composition (S-PP).

The semiconductive composition (S-PP) can further comprise polymeric components, which are different from HECO1, in an amount of preferably 0.0 to 10.0 wt.-% based on the total weight of the semiconductive composition (S-PP).

A suitable further polymeric component is e.g. a polyolefin functionalized with a mono-or polycarboxylic acid compound or a derivative of a mono- or polycarboxylic acid compound, wherein the functionalized polyolefin is different HECO1.

Said functionalized polyolefin is preferably present in the semiconductive composition (S-PP) in an amount of not more than 5.0 wt.-%, preferably from 0.05 to 2.5 wt.-%, more preferably from 0.1 to 1.0 wt.-%, most preferably from 0.2 to 0.8 wt.-%, based on the total weight amount of the semiconductive composition (S-PP).

The semiconductive composition (S-PP) can further comprise polymeric components in addition to HECO1 and optionally the functionalized polyolefin. It is however preferred that the semiconductive composition (S-PP) does not further comprise polymeric components in addition to HECO1 and optionally the functionalized polyolefin, i.e. that the polymeric components of the semiconductive composition (S-PP) consist of HECO1 and optionally the functionalized polyolefin. In one embodiment the polymeric components of the semiconductive composition (S-PP) consist of HECO1 and the functionalized polyolefin. In another embodiment the polymeric components of the semiconductive composition (S-PP) consist of HECO1.

The semiconductive composition (S-PP) preferably does not comprise, i.e. is free of a polymer comprising polar monomer units, such as acetate or acrylate or derivatives thereof containing monomer units.

The amount of the polymeric components, preferably of HECO1 and optionally the functionalized polyolefin, more preferably of HECO1, in the semiconductive composition (S-PP) is preferably in the range of from 45.0 to 80.0 wt.-%, preferably from 50.0 to 75.0 wt.-%, more preferably from 55.0 to 70.0 wt.-%, based on the total weight amount of the semiconductive composition (S-PP).

The semiconductive composition (S-PP) may comprise further component(s), such as additive(s), which may optionally be added in a mixture with a carrier polymer, e.g. in a so-called master batch. Also the carbon black can be added in form of a master batch. In such cases the carrier polymer is not calculated to the amount of the polymer components. The amount of additives and the carrier polymer of any master batch is calculated to the total amount (100 wt.-%) of the semiconductive composition (S-PP). Additives, if present, are preferably selected from antioxidant(s), stabilizer(s), processing aid(s), flame retardant additive(s), water tree retardant additive(s), acid or ion scavenger(s) and inorganic filler(s) as known in the polymer field.

The amount of further components in the semiconductive composition (S-PP) is preferably not higher than 10.0 wt.-%, such as 0 to 5.0 wt.-% or 0 to 2.5 wt.-% of the total amount of the semiconductive composition (S-PP).

It is preferred that the semiconductive composition (S-PP) does not comprise, i.e. is free of 2,2,4-trimethyl-1,2-dihydroquinoline (TMQ). In cable applications, in which the semiconductive composition(S-PP) is used in semiconductive layer(s), TMQ tends to partly diffuse from the semiconductive layer(s) into the insulation layer and can cause a yellow discoloration of the insulation layer.

It is further preferred that the semiconductive composition (S-PP) does not comprise, i.e. is free of dielectric fluids, which are different from the dielectric fluid comprising at least one alkylaryl hydrocarbon according to formula (I) as described above or below.

In one embodiment, the semiconductive composition (S-PP) comprises, preferably consists of HECO1, carbon black and the dielectic fluid, the optional functionalized polyolefin and optional further components, such as additives but is free of a polymer comprising polar monomer units and 2,2,4-trimethyl-1,2-dihydroquinoline (TMQ) and dielectric fluids, which are different from the dielectric fluid comprising at least one alkylaryl hydrocarbon according to formula (I) as described above or below, preferably comprises, more preferably consists HECO1, carbon black and the dielectic fluid, and optional further components, such as additives but is free of a polymer comprising polar monomer units and 2,2,4-trimethyl-1,2-dihydroquinoline (TMQ) and dielectric fluids, which are different from the dielectric fluid comprising at least one alkylaryl hydrocarbon according to formula (I) as described above or below.

In another embodiment, the semiconductive composition (S-PP) consists of components HECO1, carbon black and the dielectic fluid and the optional functionalized polyolefin, preferably consists of HECO1, carbon black and the dielectic fluid.

The semiconductive composition (S-PP) preferably a melt flow rate MFR₁₀ (230°C, 10 kg load) of from 1.0 to 50.0 g/10 min, more preferably from 5.0 to 40.0 g/10 min, most preferably from 10.0 to 30.0 g/10 min.

Further, the semiconductive composition (S-PP) preferably a melt flow rate MFR₂₁ (230°C, 21.6 kg load) of from 25 to 250 g/10 min, more preferably from 50 to 225 g/10 min, most preferably from 100 to 200 g/10 min.

The semiconductive composition (S-PP) preferably has a density of from 0.850 to 1.200 g/cm³, more preferably from 0.900 to 1.100 g/cm³, most preferably from 0.950 to 1.075 g/cm³.

Further, the semiconductive composition (S-PP) preferably has a volume resistivity (VR) of from 1.0 to 50.0 Ohm·cm, preferably from 1.5 to 40.0 Ohm·cm, most preferably from 2.0 to 30.0 Ohm·cm, when measured at 23°C on tape specimens of 1mm x 100 mm x 15 mm.

In some embodiments the volume resistivity can be as low as 20.0 Ohm·cm, preferably as low as 15.0 Ohm·cm, most preferably as low as 7.5 Ohm·cm, measured at 23°C on tape specimens of 1mm x 100 mm x 15 mm.

Additionally, the semiconductive composition (S-PP) preferably has a tensile strength of at least 5.0 MPa, more preferably at least 7.5 MPa and most preferably at least 8.5 MPa.

The upper limit of the tensile strength is preferably not more than 25.0 MPa, more preferably not more than 22.5 MPa and most preferably not more than 20.0 MPa.

Further, the semiconductive composition (S-PP) preferably has an elongation at break of at least 350%, more preferably at least 400% and most preferably at least 450%.

The upper limit of the elongation at break is preferably not more than 750%, more preferably not more than 700% and most preferably not more than 650%.

Thus, the semiconductive composition (S-PP) according to the invention surprisingly shows a good balance of properties in regard of processability, conductivity, mechanical properties and surface smoothness on tapes.

It is preferred that the semiconductive composition (S-PP) is not crosslinked.

A crosslinked polymer composition has a typical network, i.a. interpolymer crosslinks (bridges), as well known in the field. Those bridges can be introduced by creating radicals in the polymeric chain e.g. by reaction with peroxides or exposure to radiation or introduction of a functional group into the polymeric chain which is prone to chemical reaction with another one of said functional groups. During crosslinking a crosslinked polymer composition becomes thermoset.

It is preferred that the semiconductive composition (S-PP) is thermoplastic.

Preferably, the semiconductive composition (S-PP) is prepared by melt blending HECO1, carbon black and the dielectic fluid, the optional functionalized polyolefin and optional further components such as optional additives and further polymeric components, all as described above or below.

### HECO1

The first heterophasic copolymer of propylene and ethylene (HECO1) generally has a matrix phase and an elastomeric phase dispersed in said matrix phase.

The matrix phase is preferably a propylene-ethylene random copolymer.

HECO1 preferably has a total ethylene content of from 7.5 to 20.0 wt.-%, preferably from 9.0 to 17.5 wt.-%, most preferably from 10.0 to 15.0 wt.-%, based on the total weight of HECO1 and determined by quantitative ¹³C{¹H} nuclear-magnetic resonance (NMR) spectroscopy.

Further, HECO1 preferably has a total propylene content of from 80.0 to 92.5 wt.-%, preferably from 82.5 to 91.0 wt.-%, most preferably from 85.0 to 90.0 wt.-%, based on the total weight of HECO1 and determined by quantitative ¹³C{¹H} nuclear-magnetic resonance (NMR) spectroscopy.

HECO1 preferably consists of propylene and ethylene. Thus, it is preferred that the total ethylene content and the total propylene content make up 100 wt.-% of HECO1.

HECO1 has a melt flow rate MFR₂ of 0.5 to 10.0 g/10 min, preferably from 0.7 to 7.5 g/10 min, most preferably from 1.0 to 5.0 g/10 min, determined according to ISO 1133 at 230°C and 2.16 kg.

In one embodiment the HECO1 preferably has a melt flow rate MFR₂ of 0.5 to 2.5 g/10 min, preferably from 0.8 to 2.2 g/10 min, still more preferably from 1.0 to 2.0 g/10 min and most preferably from 1.2 to 1.9 g/10 min.

In another embodiment the HECO1 preferably has a melt flow rate MFR₂ of 2.5 to 10.0 g/10 min, preferably from 3.0 to 7.5 g/10 min, most preferably from 3.5 to 5.0 g/10 min.

In a heterophasic propylene copolymer, the matrix phase and the elastomeric phase usually cannot exactly be divided from each other. In order to characterize the matrix phase and the elastomeric phase of a heterophasic polypropylene copolymer several methods are known. One method is the extraction of a fraction which contains to the most part the elastomeric phase with xylene, thus separating a xylene cold solubles (XCS) fraction from a xylene cold insoluble (XCI) fraction. The XCS fraction contains for the most part the elastomeric phase and only a small part of the matrix phase whereas the XCI fraction contains for the most part the matrix phase and only a small part of the elastomeric phase.

HECO1 has a xylene cold soluble (XCS) fraction in a total amount of from 25.0 to 50.0 wt.-%, preferably from 30.0 to 47.5 wt.-%, most preferably from 32.5 to 45.0 wt.-%, based on the total weight amount of HECO1 and determined according to the ISO 16152.

The xylene cold soluble (XCS) fraction preferably has an amount of ethylene of from 20.0 to 35.0 wt.-%, preferably from 22.5 to 32.5 wt.-%, most preferably from 23.0 to 31.0 wt.-%, based on the total amount of monomer units in the xylene cold soluble (XCS) fraction of HECO1 and determined by quantitative ¹³C{¹H} nuclear-magnetic resonance (NMR) spectroscopy.

Further, the xylene cold soluble (XCS) fraction preferably has an intrinsic viscosity of from 100 to 350 cm³/g, preferably from 130 to 325 cm³/g, most preferably from 150 to 300 cm³/g, measured according to ISO 1628-3 at 135°C in decalin.

Additionally, the xylene cold soluble (XCS) fraction preferably has a weight average molecular weight Mw of from 185000 to 350000 g/mol, more preferably from 195000 to 325000 g/mol and most preferably from 205000 to 315000 g/mol.

Furthermore, the xylene cold soluble (XCS) fraction preferably has a polydispersity index, being the ratio of the weight average molecular weight and the number average molecular weight Mw/Mn, of from 3.5 to 8.5, preferably from 3.7 to 8.0 and most preferably from 4.0 to 7.5.

Further, HECO1 preferably has a fraction insoluble in cold xylene (XCI) in an amount of from 50.0 to 75.0 wt.-%, more preferably from 52.5 to 70.0 wt.-%, most preferably from 55.0 to 67.5 wt.-%, based on the total weight amount of HECO1 and determined according to the ISO 16152.

The fraction insoluble in cold xylene (XCI) preferably has an amount of ethylene of from 2.5 to 12.5 wt.-%, preferably from 3.5 to 10.0 wt.-%, most preferably from 4.5 to 8.5 wt.-%, based on the total amount of monomer units in the fraction insoluble in cold xylene (XCI) of HECO1 and determined by quantitative ¹³C{¹H} nuclear-magnetic resonance (NMR) spectroscopy.

Further, the fraction insoluble in cold xylene (XCI) preferably has an intrinsic viscosity of from 130 to 380 cm³/g, preferably from 150 to 350 cm³/g, most preferably from 180 to 325 cm³/g, measured according to ISO 1628-3 at 135°C in decalin.

Additionally, the fraction insoluble in cold xylene (XCI) preferably has a weight average molecular weight Mw of from 225000 to 450000 g/mol, more preferably from 240000 to 425000 g/mol and most preferably from 260000 to 400000 g/mol.

Furthermore, the fraction insoluble in cold xylene (XCI) preferably has a polydispersity index, being the ratio of the weight average molecular weight and the number average molecular weight Mw/Mn, of from 3.5 to 7.5, preferably from 3.7 to 7.0 and most preferably from 4.0 to 6.5.

The ratio of the intrinsic viscosities of the XCI fraction to the XCS fraction of HECO1 is preferably in the range of from 0.9 to 1.5, more preferably from 1.0 to 1.4 and most preferably from 1.0 to 1.3.

Further, the ratio of ethylene content of the XCS fraction to the XCI fraction of HECO1 is preferably in the range of from 2.5 to 7.5, preferably from 3.0 to 6.5, more preferably from 3.5 to 5.5.

The ratio of the weight average molecular weights of the XCI fraction to the XCS fraction is preferably in the range of from 1.05 to 1.50, more preferably from 1.10 to 1.40 and most preferably from 1.20 to 1.35.

HECO1 preferably has a total intrinsic viscosity of from 150 to 350 cm³/g, preferably from 170 to 325 cm³/g, most preferably from 200 to 300 cm³/g, measured according to ISO 1628-3 at 135°C in decalin.

Further, HECO1 preferably has a melting temperature Tm of from 140 to 159°C, more preferably from 143 to 157°C and most preferably from 145 to 153°C, determined by differential scanning calorimetry.

Additionally, HECO1 preferably has a crystallization temperature Tc of from 85 to 125°C, more preferably from 88 to 122°C, most preferably from 90 to 120°C, determined by differential scanning calorimetry.

The difference of the melting temperature to the crystallization temperature Tm-Tc is preferably in the range of from 20 to 45°C, preferably 25 to 40°C and most preferably from 27 to 37°C.

HECO1 can be polymerized in a sequential multistage polymerization process, i.e. in a polymerization process in which two or more polymerization reactors are connected in series. Preferably, in the sequential multistage polymerization process, two or more, more preferably three or more, such as three or four, polymerization reactors are connected in series. The term "polymerization reactor" shall indicate that the main polymerization takes place. Thus in case the process consists of four polymerization reactors, this definition does not exclude the option that the overall process comprises for instance a pre-polymerization step in a pre-polymerization reactor.

The matrix phase of HECO1 is preferably polymerized in first polymerization reactor for producing a unimodal matrix phase or in the first and second polymerization reactor for producing a multimodal matrix phase.

The elastomeric phase of HECO1 is preferably polymerized in the subsequent one or two polymerization reactor(s) in the presence of the matrix phase for producing a unimodal elastomeric phase or a multimodal elastomeric phase.

Preferably, the polymerization reactors are selected from slurry phase reactors, such as loop reactors and/or gas phase reactors such as fluidized bed reactors, more preferably from loop reactors and fluidized bed reactors.

A preferred sequential multistage polymerization process is a "loop-gas phase"-process, such as developed by Borealis A/S, Denmark (known as BORSTAR^{®} technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol^{®} process of LyondellBasell.

Suitable sequential polymerization processes for polymerizing HECO1 are e.g. disclosed in EP 1 681 315 A1 or WO 2013/092620 A1.

HECO1 can be polymerized in the presence of a Ziegler-Natta catalyst or a single site catalyst.

Suitable Ziegler-Natta catalysts are e.g. disclosed in US 5,234,879, WO 92/19653, WO 92/19658, WO 99/33843, WO 03/000754, WO 03/000757, WO 2013/092620 A1 or WO 2015/091839.

Suitable single site catalysts are e.g. disclosed in WO 2006/097497, WO 2011/076780 or WO 2013/007650.

In one embodiment, HECO1 is subjected to a visbreaking step as e.g. described in WO 2013/092620 A1. In said embodiment HECO1 after visbreaking preferably has a melt flow rate MFR₂ of 2.5 to 10.0 g/10 min, preferably from 3.0 to 7.5 g/10 min, most preferably from 3.5 to 5.0 g/10 min.

In another embodiment, HECO1 is not subjected to a visbreaking step as e.g. described in WO 2013/092620 A1. In said embodiment HECO1 preferably has a melt flow rate MFR₂ of 0.5 to 2.5 g/10 min, preferably from 0.8 to 2.2 g/10 min, still more preferably from 1.0 to 2.0 g/10 min and most preferably from 1.2 to 1.9 g/10 min.

In one embodiment HECO1 comprises an alpha-nucleating agent. The alpha-nucleating agent is generally not restricted.

Preferably, the alpha-nucleating agent is selected from soluble alpha-nucleating agents and polymeric alpha-nucleating agents.

The alpha-nucleating agent is preferably selected from the group consisting of
(i) dibenzylidenesorbitol (e.g. 1,3 : 2,4 dibenzylidenesorbitol) and C₁-C₈-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, and
(ii) vinylcycloalkane polymer and vinylalkane polymer (as discussed in more detail below), and
(iii) mixtures thereof.

The alpha-nucleating agent is preferably selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, vinylcycloalkane polymer, vinylalkane polymer, and mixtures thereof.

Especially preferred are vinylcycloalkane polymers such as e.g. vinylcyclohexane (VCH) polymers. Such polymers can be added e.g. using Borealis Nucleation Technology (BNT).

The alpha-nucleating agent can be added to the first copolymer (A) as an isolated raw material or in a mixture with a carrier polymer, i.e. in a so-called master batch. The amount of the carrier polymer of the master batch thereby is calculated to the amount of the alpha-nucleating agent.

Preferably, in this embodiment the first copolymer (A) contains from 0.00001 to 5.00 wt.-%, more preferably from 0.0001 to 2.50 wt.-% of the alpha-nucleating agent.

The amount of pure alpha-nucleating agent in the first copolymer (A) (without optional carrier polymer of a master batch) is preferably in the range of from 0.01 to 2000 ppm, more preferably from 0.1 to 1000 ppm.

In another embodiment the first copolymer (A) does not comprise, i.e. is free of alpha-nucleating agents.

Heterophasic propylene copolymer resins suitable as HECO1 are also commercially available. These resins are usually already additivated with stabilizer packages. Thus, when using commercially available resins as HECO1 the addition of additives as described above might have to be adjusted to the already present additives.

In case of a commercially available HECO1 the above stated properties can be measured using a common measurement method or verified by the technical documentation provided by the supplier.

### Carbon black

Any carbon black which is electrically conductive can be used. Typically, the carbon black will be a speciality carbon black or a P-type black. Non-limiting examples of suitable carbon blacks include furnace blacks.

The carbon black may have a nitrogen adsorption surface area (NSA) of 5 to 400 m²/g, for example of 10 to 300 m²/g, e.g. of 30 to 200 m²/g, when determined according to ASTM D6556-19.

Further, the carbon black may have one or more of the following properties:
- a primary particle size of at least 5 nm, for example 5 to 30 nm, preferably 10 to 20 nm which is defined as the average particle diameter according to ASTM D3849-14,
- iodine adsorption number of at least 10 mg/g, for example 10 to 300 mg/g, preferably 30 to 250 mg/g, more preferably 30 to 200 mg/g, such as 30 to 60 mg/g, or 80 to 140 mg/g, when determined according to ASTM D-1510-19; and/or
- oil absorption number (OAN) of at least 30 ml/100g, for example 30 to 140 ml/100g, preferably 50 to 130 ml/100g, more preferably 70 to 130 ml/100g, when measured according to ASTM D 2414-19.

These properties are usually provided in the technical documentation from the supplier of commercial carbon black grades.

One group of suitable furnace blacks have a primary particle size of 28 nm or less. Particularly suitable furnace blacks of this category may have an iodine adsorption number between 60 and 300 mg/g. It is further suitable that the oil absorption number (of this category) is between 50 and 225 ml/100g, for example between 50 and 200 ml/100g.

Other suitable carbon blacks can be made by any other process or can be further treated. Suitable carbon blacks for semiconductive cable layers are suitably characterized by their cleanliness. Therefore, suitable carbon blacks have an ash-content of less than 0.2wt% measured according to ASTM D1506, a 325 mesh sieve residue of less than 30 ppm according to ASTM D1514 and have less than 3 wt.-%, preferably less than 1 wt.-% total sulphur according to ASTMD1619.

Furnace carbon black is a generally acknowledged term for the well-known carbon black type that is produced in a furnace-type reactor. As examples of carbon blacks, the preparation process thereof and the reactors, reference can be made to i.a. EP629222 of Cabot, US 4,391,789, US 3,922,335 and US 3,401,020. As an example of commercial furnace carbon black grades N115, N351, N293, N220 and N550 can be mentioned. To further increase the suitability of such carbon blacks in semiconductive compounds, modifications of these commercial carbon blacks e.g. in terms of cleanliness, pellet properties and surface area are advantageous. Furnace carbon blacks are conventionally distinguished from acetylene carbon blacks.

### Dielectric fluid

The dielectric fluid comprises comprising at least one alkylaryl hydrocarbon having the structural formula (I) 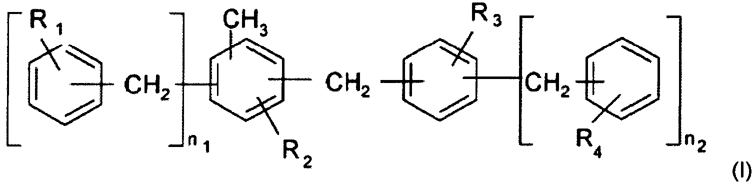 wherein
R₁, R₂, R₃ and R₄, equal or different are independently hydrogen or methyl;
n₁ and n₂, equal or different, are 0, 1 or 2, with the proviso that the sum n₁ + n₂ is less than or equal to 3.

A preferred example of the alkylaryl hydrocarbon having the structural formula (I) is dibenzyltoluene.

The dielectric fluid preferably has a viscosity, determined according to DIN 51562 at 20°C of from 15 to 60 mm²/s, preferably from 25 to 57 mm²/s, more preferably from 30 to 55 mm²/s.

Further, the dielectric fluid preferably has a viscosity, determined according to DIN 51562 at 200°C of from 0.80 to 1.00 mm²/s, preferably from 0.83 to 0.97 mm²/s, more preferably from 0.85 to 0.95 mm²/s.

Still further, the dielectric fluid preferably has a viscosity, determined according to DIN 51562 at 220°C of from 0.65 to 0.90 mm²/s, preferably from 0.67 to 0.87 mm²/s, more preferably from 0.70 to 0.85 mm²/s.

Additionally, the dielectric fluid preferably has a density, determined according to DIN 51562 at 20°C of from 0.95 to 1.15 g/ml, preferably from 0.98 to 1.13 g/ml, more preferably from 1.00 to 1.10 g/ml.

Such dielectric fluid can be commercially available. A suitable example is Marlotherm SH from Sasol Germany GmbH.

In case of a commercially available dielectric fluid the above stated properties can be measured using a common measurement method or verified by the technical documentation provided by the supplier.

### Optional functionalized polyolefin

"Functionalized with a mono- or polycarboxylic acid compound or a derivative of a mono- or polycarboxylic acid compound" or shortly "functionalized" means herein generally that the polymer is functionalized with carbonyl containing groups originating from said mono- or polycarboxylic acid group or a derivative thereof. The carbonyl containing compound used for the functionalization is typically unsaturated. Such compound contains preferably at least one ethylenic unsaturation and at least one carbonyl group. Such carbonyl containing groups can be incorporated to a polymer by grafting a compound bearing said carbonyl containing group(s) or by copolymerising a monomer with a comonomer(s) bearing such carbonyl containing group(s).

Herein, the functionalized carbonyl containing compound of functionalized polyolefin (D) is understood not to mean any polar comonomer(s), e.g. an acrylate, a methacrylate or an acetate comonomer.

The functionalized polyolefin is different from HECO1.

The functionalized polyolefins suitable for the present invention are well known and are commercially available or can be produced according to the known processes described in the chemical literature.

Preferable polycarboxylic acid compounds for functionalization are unsaturated dicarboxylic acids or derivatives thereof. More preferable carbonyl containing compounds for the functionalization are derivatives of unsaturated mono- or polycarboxylic acid compounds, more preferably derivatives of unsaturated dicarboxylic acids. Preferred carbonyl containing compounds for functionalization are anhydrides of a mono- or polycarboxylic acid, which are also referred as "acid anhydrides" or "anhydrides". The acid anhydrides can be linear or cyclic.

Preferably, the functionalized polyolefin is an acid anhydride functionalized polyolefin, more preferably a maleic anhydride (MAH) functionalized polyolefin. Preferably, the functionalized polyolefin is obtainable by grafting maleic anhydride to a polyolefin (also referred herein shortly as MAH grafted polyolefin or MAH-g-polyolefin).

Preferred polyolefin for functionalized polyolefin is a functionalized polypropylene or polyethylene. Both polyolefin types are well known in the field.

In case the functionalized polyolefin is a functionalized polyethylene, then it is preferably selected from a polyethylene produced in a low pressure process using a coordination catalyst or a polyethylene produced in a high pressure (HP) polymerization process and which bears said carbonyl containing groups. Both meanings are well known in the field. The MFR (190°C, 2.16 kg) of the functionalized polyethylene is preferably of above 0.05 g/10 min, preferably from 0.1 to 200 g/20 min, preferably from 0.80 to 100 g/10 min, more preferably from 1 .0 to 50.0 g/10 min.

In case the functionalized polyolefin is a functionalized polyethylene produced in a low pressure process using a coordination catalyst, then it is preferably selected from copolymers of ethylene with one or more comonomer(s), preferably alpha-olefin(s). Such polyethylene copolymers have preferably a density of from 850 to 950 kg/m³, preferably from 900 to 945 kg/m³, preferably from 910 to 940 kg/m³. Such functionalized polyethylene copolymer is preferably a functionalized linear low density polyethylene copolymers (LLDPE) which preferably has a density from 915 to 930 kg/m³. Preferable LLDPE as functionalized polyolefin is MAH functionalized LLDPE, preferably MAH-g-LLDPE.

In case the functionalized polyolefin is a functionalized polyethylene produced in a HP process, then the polyethylene is preferably produced by radical polymerization in a HP process in the presence of an initiator(s). The HP reactor can be e.g. a well known tubular or autoclave reactor or a mixture thereof, preferably a tubular reactor. The high pressure (HP) polymerization and the adjustment of process conditions for further tailoring the other properties of the polyolefin depending on the desired end application are well known and described in the literature, and can readily be used by a skilled person. Suitable polymerization temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps. Such functionalized polyethylene produced in a HP process is preferably a low density polyethylene (LDPE) which is functionalized and preferably has a density of from 900 to 950 kg/m³, preferably from 910 to 940 kg/m³, preferably from 915 to 930 kg/m³. More preferably, the functionalized LDPE polymer is selected from a LDPE homopolymer or a LDPE copolymer of ethylene with one or more comonomers (referred herein also as functionalized polar LDPE copolymer), which bears said carbonyl containing groups. Suitable comonomers for functionalized LDPE copolymer are selected from olefins, preferably alpha-olefins, or polar comonomers, or any mixtures thereof. As said above such polar comonomers may additionally be present and are differentiated from the carbonyl containing compounds used for the functionalization. Functionalized LDPE copolymer of ethylene with polar comonomer may optionally comprise other comonomer(s), such as alpha-olefin(s). Polar comonomer is preferably selected from a comonomer containing hydroxyl group(s), alkoxy group(s), carbonyl group(s), carboxyl group(s), ether group(s) or ester group(s), or a mixture thereof, more preferably from a comonomer(s) containing carboxyl and/or ester group(s), still more preferably, the polar comonomer(s) is selected from the group of acrylate(s), methacrylate(s) acrylic acids, methacrylic acids or acetate(s), or any mixtures thereof. The polar comonomer(s) for the functionalized polar LDPE copolymer is more preferably selected from the group of alkyl acrylates, alkyl methacrylates, acrylic acids, methacrylic acids or vinyl acetate, or a mixture thereof. It is further preferred that the comonomers are selected from C1- to C6-alkyl acrylates, C1- to C6 -alkyl methacrylates, acrylic acids, methacrylic acids and vinyl acetate, more preferred from C1- to C4- alkyl acrylate such as methyl, ethyl, propyl or butyl acrylate, or vinyl acetate, or any mixture thereof. The amount of the polar comonomer in the functionalized LDPE copolymer is preferably from 5 to 50 wt.-% based on the total amount of the composition, more preferred up to 30 wt.-%, most preferred up to 25 wt.-%. Functionalized LDPE homopolymer or LDPE copolymer is preferably selected from a MAH functionalized LDPE homopolymer, a MAH functionalized LDPE copolymer which is preferably selected from a MAH functionalized ethylene methyl acrylate (EMA), a MAH functionalized ethylene ethyl acrylate (EEA), a MAH functionalized ethylene butyl acrylate (EBA) or MAH functionalized ethyl vinyl acrylate (EVA), more preferably from MAH-g-LDPE homopolymer or MAH-g-LDPE copolymer, more preferably from MAH-g-EMA, MAH-g-EEA, MAH-g-EBA or MAH-g-EVA.

In case the functionalized polyolefin is a functionalized polypropylene, then it is preferably selected from homopolymers of propylene, random copolymers of propylene or a heterophasic copolymer of propylene, which have the same meaning and properties as given above under the general description for HECO1 and which bear said carbonyl containing groups.

Preferred polypropylene is homopolymer or a random copolymer of propylene.

According to a preferred embodiment of the polymer composition, the maleic anhydride functionalized, preferably grafted, polyolefin is maleic anhydride functionalized, preferably grafted, polypropylene (MAH-g-PP) or maleic anhydride functionalized, preferably grafted, polyethylene (MAH-g-PE).

Preferred polyolefin for the functionalized polyolefin is a functionalized polypropylene as defined above. Such polypropylene (PP) for the functionalized polyolefin is preferably a maleic anhydride functionalized PP, more preferably MAH-g-PP.

The functionalized polyolefin, more preferably the MAH functionalized PP, more preferably MAH-g-PP, has an MFR₂ (230°C, 2.16 kg) of from 0.5 to 500 g/10 min, preferably from 1.0 to 500 g/10 min.

### Polypropylene composition (I-PP)

The polypropylene composition (I-PP) comprises a second heterophasic copolymer of propylene and ethylene (HECO2).

The polypropylene composition (I-PP) preferably comprises HECO2 in an amount of from 90.0 to 100.0 wt.-%, more preferably from 92.5 to 99.999999 wt.-% and most preferably from 95.0 to 99.9 wt.-%, 90.0 to 99.999999 wt.-%, more preferably from 92.5 to 99.9 wt.-% and most preferably from 95.0 to 99.8 wt.-%, based on the total amount of the polypropylene composition (I-PP).

The polypropylene composition (I-PP) can further comprise polymeric components which are different from HECO2 in an amount of preferably 0.0 to 10.0 wt.-% based on the total amount of the polypropylene composition (I-PP).

In one embodiment the polymeric components of the polypropylene composition (I-PP) consist of HECO2.

In one embodiment the polypropylene composition (I-PP) preferably comprises an alpha-nucleating agent. The alpha-nucleating agent thereby is not counted to the optional additives as described herein.

In said embodiment, the polypropylene composition (I-PP) preferably contains from 0.000001 to 5.00 wt.-%, more preferably from 0.00001 to 2.50 wt.-% of the alpha-nucleating agent, based on the total amount of the polypropylene composition (I-PP). The amount of pure alpha-nucleating agent in the polypropylene composition (I-PP) (without optional carrier polymer of a master batch) is preferably in the range of from 0.01 to 6000 ppm, more preferably from 0.1 to 5000 ppm, based on the total amount of the polypropylene composition (I-PP).

The alpha-nucleating agent is preferably selected from soluble alpha-nucleating agents and particulate alpha-nucleating agents.

The alpha-nucleating agent (B) is preferably selected from the group consisting of
(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and C₁-C₈-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, and
(iii) salts of diesters of phosphoric acid, e.g. sodium 2,2'-methylenebis (4,6-di-tertbutylphenyl) phosphate or aluminium-hydroxy-bis[2,2'-methylene-bis(4,6-di-tbutylphenyl)phosphate], and
(iv) vinylcycloalkane polymer and vinylalkane polymer (as discussed in more detail below), and
(v) mixtures thereof.

The alpha-nucleating agent is preferably selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, vinylcycloalkane polymer, vinylalkane polymer, and mixtures thereof.

Especially preferred is dimethyldibenzylidenesorbitol (e.g. 1,3 : 2,4 di(methylbenzylidene) sorbitol (DMDBS).

The alpha-nucleating agent can be added to the polypropylene composition (I-PP) as an isolated raw material or in a mixture with a carrier polymer, i.e. in a so-called master batch. The amount of the carrier polymer of the master batch thereby is calculated to the amount of the alpha-nucleating agent.

In another embodiment, the polypropylene composition (I-PP) does not comprise, i.e. is free of an alpha nucleating agent.

Besides these polymeric components and the optional alpha-nucleating agent the polypropylene composition (I-PP) can comprise one or more additives in an amount of from 0.0 up to 5.0 wt.-%, based on the total amount of the polypropylene composition (I-PP). The one or more additives are preferably selected from acid scavengers, antioxidants, beta nucleating agents, etc. Such additives are commercially available and for example described in "Plastic Additives Handbook", 6th edition 2009 of Hans Zweifel (pages 1141 to 1190).

Usually, these additives are added in quantities of 1 to 50000 ppm for each single component.

The one or more additives can be added to the polymeric components in a blending step.

Thereby, the one or more additives can be added to the polymeric components in form of master batches in which one or more additives are blended with a carrier polymer in concentrated amounts. Any optional carrier polymer is calculated to the amount of additives, based on the total amount of the polypropylene composition (I-PP).

It is especially preferred that no dielectric fluid, such as a dielectric fluid as described e.g. in EP 2 739 679 or the dielectric fluid added to the semiconductive composition as described herein is added to the polypropylene composition (I-PP).

The polypropylene composition (I-PP) has a melt flow rate MFR₂ of from 0.5 to 10.0 g/10 min, more preferably from 0.7 to 7.5 g/10 min, most preferably from 1.0 to 5.0 g/10 min, determined according to ISO 1133 at 230°C and 2.16 kg.

Further, the polypropylene composition (I-PP) preferably has a melting temperature Tm of from 140 to 159°C, more preferably from 143 to 157°C and most preferably from 145 to 153°C, determined by differential scanning calorimetry.

Additionally, the polypropylene composition (I-PP) preferably has a crystallization temperature Tc of from 105 to 130°C, preferably from 107 to 128°C and most preferably from 110 to 125°C, determined by differential scanning calorimetry.

The difference of the melting temperature to the crystallization temperature Tm-Tc is preferably in the range of from 20 to 45°C, preferably 25 to 40°C and most preferably from 27 to 37°C.

The polypropylene composition (I-PP) preferably has a total ethylene content of from 10.0 to 16.0 wt.-%, more preferably from 10.5 to 15.0 wt.-%, most preferably from 11.0 to 14.0 wt.-%, based on the total amount of monomer units in the polypropylene composition (I-PP) and determined by quantitative ¹³C{¹H} nuclear-magnetic resonance (NMR) spectroscopy.

Further, the polypropylene composition (I-PP) preferably has a total propylene content of from 84.0 to 90.0 wt.-%, preferably from 85.0 to 89.5 wt.-%, most preferably from 86.0 to 89.0 wt.-%, based on the total weight of the polypropylene composition (I-PP) and determined by quantitative ¹³C{¹H} nuclear-magnetic resonance (NMR) spectroscopy.

The polypropylene composition (I-PP) preferably consists of propylene and ethylene. Thus, it is preferred that the total ethylene content and the total propylene content make up 100 wt.-% of polypropylene composition (I-PP).

It is preferred that the polypropylene composition (I-PP) has a total intrinsic viscosity of from 185 to 350 cm³/g, preferably from 200 to 325 cm³/g and most preferably from 210 to 300 cm³/g, measured according to ISO 1628-3 at 135°C in decalin.

The polypropylene composition (I-PP) has a xylene cold soluble (XCS) fraction in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), and determined according to the ISO 16152.

The xylene cold soluble (XCS) fraction has an amount of ethylene of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction and determined by quantitative ¹³C{¹H} nuclear-magnetic resonance (NMR) spectroscopy.

Further, the xylene cold soluble (XCS) fraction preferably has an intrinsic viscosity of from 150 to 350 cm³/g, preferably from 165 to 325 cm³/g and most preferably from 175 to 300 cm³/g, measured according to ISO 1628-3 at 135°C in decalin.

Additionally, the xylene cold soluble (XCS) fraction preferably has a weight average molecular weight Mw of from 185000 to 350000 g/mol, more preferably from 200000 to 325000 g/mol and most preferably from 210000 to 315000 g/mol.

Furthermore, the xylene cold soluble (XCS) fraction preferably has a polydispersity index, being the ratio of the weight average molecular weight and the number average molecular weight Mw/Mn, of from 3.5 to 8.5, preferably from 3.7 to 8.0 and most preferably from 4.0 to 7.5.

Further, the polypropylene composition (I-PP) has a fraction insoluble in cold xylene (XCI) preferably in a total amount of from 50.0 to 75.0 wt.-%, preferably from 55.0 to 72.5 wt.-%, more preferably from 57.5 to 70.0 wt.-% and most preferably from 59.0 to 67.5 wt.-%, based on the total weight amount of the polypropylene composition (I-PP) and determined according to the ISO 16152.

The fraction insoluble in cold xylene (XCI) preferably has an amount of ethylene of from 3.0 to 9.0 wt.-%, more preferably from 4.0 to 8.5 wt.-% and most preferably from 4.5 to 7.5 wt.-%, based on the total amount of monomer units in the fraction insoluble in cold xylene (XCI) determined by quantitative ¹³C{¹H} nuclear-magnetic resonance (NMR) spectroscopy.

Further, the fraction insoluble in cold xylene (XCI) preferably has an intrinsic viscosity of from 185 to 350 cm³/g, preferably from 220 to 325 cm³/g and most preferably from 210 to 300 cm³/g, measured according to ISO 1628-3 at 135°C in decalin.

Additionally, the fraction insoluble in cold xylene (XCI) preferably has a weight average molecular weight Mw of from 225000 to 450000 g/mol, more preferably from 240000 to 425000 g/mol and most preferably from 260000 to 400000 g/mol.

Furthermore, the fraction insoluble in cold xylene (XCI) preferably has a polydispersity index, being the ratio of the weight average molecular weight and the number average molecular weight Mw/Mn, of from 3.5 to 7.5, preferably from 3.7 to 7.0 and most preferably from 4.0 to 6.5.

The ratio of the intrinsic viscosities of the XCI fraction to the XCS fraction is preferably in the range of from 0.9 to 1.5, more preferably from 1.0 to 1.4 and most preferably from 1.0 to 1.3.

Further, the ratio of ethylene content of the XCS fraction to the XCI fraction is preferably in the range of from 2.5 to 7.5, preferably from 3.0 to 6.5, more preferably from 3.5 to 5.5.

The ratio of the weight average molecular weights of the XCI fraction to the XCS fraction is preferably in the range of from 1.05 to 1.50, more preferably from 1.10 to 1.40 and most preferably from 1.20 to 1.35.

The polypropylene composition (I-PP) preferably has a flexural modulus of not more than 470 MPa, such as from 200 to 470 MPa, preferably from 250 to 450 MPa and most preferably from 300 to 430 MPa, determined according to ISO 178 method A on 80 mm × 10 mm × 4 mm specimens.

Further, the polypropylene composition (I-PP) preferably has a Charpy notched impact strength at 23°C of at least 70.0 kJ/m², such as from 70.0 to 100.0 kJ/m², more preferably from 72.5 to 95.0 kJ/m² and most preferably from 75.0 to 90.0 kJ/m², determined according to ISO 179-1/1eA on notched 80 mm × 10 mm × 4 mm specimens.

Still further, the polypropylene composition (I-PP) preferably has a Charpy notched impact strength at -20°C of at least 3.5 kJ/m², such as from 3.5 to 10.0 kJ/m², more preferably from 3.7 to 9.0 kJ/m² and most preferably from 4.0 to 8.0 kJ/m², determined according to ISO 179-1/1eA on notched 80 mm × 10 mm × 4 mm specimens.

Preferably, the polypropylene composition (I-PP) is prepared by melt blending HECO2, the optional alpha-nucleating agent, the optional additional polymeric components and the optional further additives, all as described above or below.

### HECO2

The second heterophasic copolymer of propylene and ethylene (HECO2) generally has a matrix phase and an elastomeric phase dispersed in said matrix phase.

The matrix phase is preferably a propylene-ethylene random copolymer.

HECO2 preferably has a total ethylene content of from 10.0 to 16.0 wt.-%, more preferably from 10.5 to 15.0 wt.-%, most preferably from 11.0 to 14.0 wt.-%, based on the total weight of HECO2 and determined by quantitative ¹³C{¹H} nuclear-magnetic resonance (NMR) spectroscopy.

Further, HECO2 preferably has a total propylene content of from 84.0 to 90.0 wt.-%, preferably from 85.0 to 89.5 wt.-%, most preferably from 86.0 to 89.0 wt.-%, based on the total weight of HECO1 and determined by quantitative ¹³C{¹H} nuclear-magnetic resonance (NMR) spectroscopy.

HECO2 preferably consists of propylene and ethylene. Thus, it is preferred that the total ethylene content and the total propylene content make up 100 wt.-% of HECO2.

HECO2 has a melt flow rate MFR₂ of 0.5 to 10.0 g/10 min, preferably from 0.7 to 7.5 g/10 min, most preferably from 1.0 to 5.0 g/10 min, determined according to ISO 1133 at 230°C and 2.16 kg.

In one embodiment the HECO2 preferably has a melt flow rate MFR₂ of 0.5 to 2.5 g/10 min, preferably from 0.8 to 2.2 g/10 min, still more preferably from 1.0 to 2.0 g/10 min and most preferably from 1.2 to 1.9 g/10 min.

In another embodiment the HECO2 preferably has a melt flow rate MFR₂ of 2.5 to 10.0 g/10 min, preferably from 3.0 to 7.5 g/10 min, most preferably from 3.5 to 5.0 g/10 min.

HECO2 preferably has properties in the same range as the polypropylene composition as described above or below.

HECO2 can be polymerized in a sequential multistage polymerization process, i.e. in a polymerization process in which two or more polymerization reactors are connected in series. Preferably, in the sequential multistage polymerization process, two or more, more preferably three or more, such as three or four, polymerization reactors are connected in series. The term "polymerization reactor" shall indicate that the main polymerization takes place. Thus in case the process consists of four polymerization reactors, this definition does not exclude the option that the overall process comprises for instance a pre-polymerization step in a pre-polymerization reactor.

The matrix phase of HECO2 is preferably polymerized in first polymerization reactor for producing a unimodal matrix phase or in the first and second polymerization reactor for producing a multimodal matrix phase.

The elastomeric phase of HECO2 is preferably polymerized in the subsequent one or two polymerization reactor(s) in the presence of the matrix phase for producing a unimodal elastomeric phase or a multimodal elastomeric phase.

Preferably, the polymerization reactors are selected from slurry phase reactors, such as loop reactors and/or gas phase reactors such as fluidized bed reactors, more preferably from loop reactors and fluidized bed reactors.

A preferred sequential multistage polymerization process is a "loop-gas phase"-process, such as developed by Borealis A/S, Denmark (known as BORSTAR^{®} technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol^{®} process of LyondellBasell.

Suitable sequential polymerization processes for polymerizing HECO1 are e.g. disclosed in EP 1 681 315 A1 or WO 2013/092620 A1.

HECO2 can be polymerized in the presence of a Ziegler-Natta catalyst or a single site catalyst.

Suitable Ziegler-Natta catalysts are e.g. disclosed in US 5,234,879, WO 92/19653, WO 92/19658, WO 99/33843, WO 03/000754, WO 03/000757, WO 2013/092620 A1 or WO 2015/091839.

Suitable single site catalysts are e.g. disclosed in WO 2006/097497, WO 2011/076780 or WO 2013/007650.

In one embodiment, HECO2 is subjected to a visbreaking step as e.g. described in WO 2013/092620 A1. In said embodiment HECO1 after visbreaking preferably has a melt flow rate MFR₂ of 2.5 to 10.0 g/10 min, preferably from 3.0 to 7.5 g/10 min, most preferably from 3.5 to 5.0 g/10 min.

In another embodiment, HECO2 is not subjected to a visbreaking step as e.g. described in WO 2013/092620 A1. In said embodiment HECO2 preferably has a melt flow rate MFR₂ of 0.5 to 2.5 g/10 min, preferably from 0.7 to 2.2 g/10 min, still more preferably from 1.0 to 2.0 g/10 min and most preferably from 1.1 to 1.9 g/10 min.

Heterophasic propylene copolymer resins suitable as HECO2 are also commercially available. These resins are usually already additivated with stabilizer packages. Thus, when using commercially available resins as HECO2 the addition of additives as described above might have to be adjusted to the already present additives.

### Process

In a second aspect the present invention relates to a process for producing a power cable comprising the following steps:
a) preparing a semiconductive polypropylene composition (S-PP), which comprises from 45.0 to 80.0 wt.-%, preferably from 50.0 to 75.0 wt.-%, more preferably from 55.0 to 70.0 wt.-% of a first heterophasic copolymer of propylene and ethylene (HECO1) having
   - a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
   - a xylene cold soluble (XCS) fraction, determined according to the ISO 16152, in a total amount of from 25.0 to 50.0 wt%, preferably from 30.0 to 47.5 wt%, most preferably from 32.5 to 45.0 wt%, based on the total weight amount of the heterophasic copolymer of propylene and ethylene (HECO1), wherein
   - said xylene cold soluble (XCS) fraction has an intrinsic viscosity of from 100 to 350 cm³/g, preferably from 130 to 325 cm³/g, most preferably from 150 to 300 cm³/g, measured according to ISO 1628-3 at 135°C in decalin;

   from 5.0 to 40.0 wt.-%, preferably from 10.0 to 37.5 wt.-%, more preferably from 15.0 to 35.0 wt.-% carbon black; and
   from 1.0 to 15.0 wt.-%, preferably from 2.5 to 12.5 wt.-%, more preferably from 3.5 to 10.0 wt.-% of a dielectric fluid comprising at least one alkylaryl hydrocarbon having the structural formula (I) 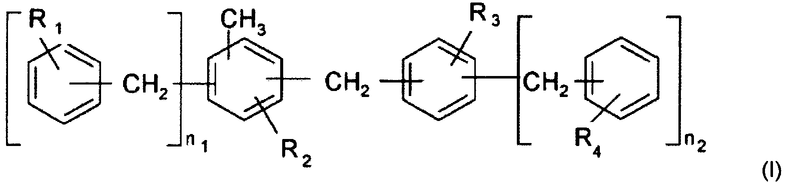 wherein
      R₁, R₂, R₃ and R₄, equal or different are independently hydrogen or methyl;
      n₁ and n₂, equal or different, are 0, 1 or 2, with the proviso that the sum n₁ + n₂ is less than or equal to 3;
      wherein all weight percentages are based on the total weight of the semiconductive composition (S-PP);
b) preparing a polypropylene composition (I-PP), which comprises a second heterophasic copolymer of propylene and ethylene (HECO2), wherein the polypropylene composition (I-PP) has
   - a melt a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
   - a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), wherein
   - said xylene cold soluble (XCS) fraction has an ethylene content, determined by quantitative ¹³C{¹H} nuclear-magnetic resonance (NMR) spectroscopy, of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction; characterized in that
   - the polypropylene composition (I-PP) is free of a dielectric fluid;
c) coating the conductor with an inner semiconductive layer comprising the semiconductive polypropylene composition (S-PP);
d) coating the inner semiconductive layer with an insulation layer comprising the polypropylene composition (I-PP); and
e) coating the insulation layer with an outer semiconductive layer comprising the semiconductive polypropylene composition (S-PP).

It is preferred that all aspects and embodiments of the power cable, the semiconductive composition and its components and the polypropylene composition and its components, all as described herein, also apply to the process of the second aspect.

### Use

In a third aspect the present invention relates to the use of a dielectric fluid comprising at least one alkylaryl hydrocarbon having the structural formula (I) 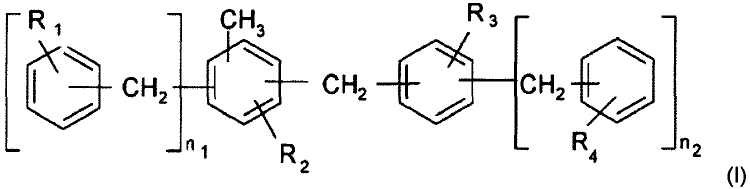 wherein
R₁, R₂, R₃ and R₄, equal or different, are independently hydrogen or methyl;
n₁ and n₂, equal or different, are 0, 1 or 2, with the proviso that the sum n₁ + n₂ is less than or equal to 3,
in the semiconductive composition (S-PP) for increasing the Weibull alpha-value of the power cable according to any one of the preceding claims to a value of at least 35 kV/mm, such as from 35.0 to 65.0 kV/mm, preferably from 40.0 to 65.0 kV/mm and most preferably from 45.0 to 65.0 kV/mm, measured in agreement with CENELEC HD 605 5.4.15.3.4 for 6/10 kV cables on a 10 kV cable.

It is preferred that all aspects and embodiments of the power cable, the semiconductive composition and its components, the polypropylene composition and its components and the process for producing a power cable, all as described herein, also apply to the process of the second aspect.

### Examples

The following definitions of terms and determination methods apply for the above general description of the invention as well as to the below examples unless otherwise defined.

### 1. Measurement methods

### a) Melt Flow Rate (MFR2)

The melt flow rate is the quantity of polymer in grams which the test apparatus standardized to ISO 1133 or ASTM D1238 extrudes within 10 minutes at a certain temperature under a certain load.

The melt flow rate MFR₂ of propylene based polymers and the polypropylene composition is measured at 230°C with a load of 2.16 kg according to ISO 1133.

The melt flow rate MFR₁₀ of propylene based polymers and the semiconductive composition is measured at 230°C with a load of 10 kg according to ISO 1133.

The melt flow rate MFR₂₁ of propylene based polymers and the semiconductive composition is measured at 230°C with a load of 21.6 kg according to ISO 1133.

The melt flow rate MFR₂ of the ethylene based polymers and polyethylene compositions is measured at 190°C with a load of 2.16 kg according to ISO 1133.

### b) Comonomer content

Quantitative nuclear-magnetic resonance (NMR) spectroscopy was used to quantify the comonomer content of the polymers.

### Comonomer content quantification of poly(propylene-co-ethylene) copolymers

Quantitative ¹³C{¹H} NMR spectra were recorded in the solution-state using a Bruker Advance III 400 NMR spectrometer operating at 400.15 and 100.62 MHz for ¹H and ¹³C respectively. All spectra were recorded using a ¹³C optimised 10 mm extended temperature probe head at 125°C using nitrogen gas for all pneumatics. Approximately 200 mg of material was dissolved in 3 ml of *1,2*-tetrachloroethane-*d₂* (TCE-*d₂*) along with chromium-(III)-acetylacetonate (Cr(acac)₃) resulting in a 65 mM solution of relaxation agent in solvent {8}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {3, 4}. A total of 6144 (6k) transients were acquired per spectra.

Quantitative ¹³C{¹H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the ¹³C{¹H} spectra. This method was chosen for its robust nature and ability to account for the presence of regiodefects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to: $E = 0.5 \left(Sββ+Sβγ+Sβδ+0.5\left(Sαβ+Sαγ\right)\right)$

Through the use of this set of sites the corresponding integral equation becomes: $E = 0.5 \left({I}_{H}+{I}_{G}+0.5\left({I}_{C}+{I}_{D}\right)\right)$ using the same notation used in the article of Wang et al. {6}. Equations used for absolute propylene content were not modified.

The mole percent comonomer incorporation was calculated from the mole fraction: $E \left[mol%\right] = 100 * fE$

The weight percent comonomer incorporation was calculated from the mole fraction: $E \left[wt%\right] = 100 * \left(fE*28.06\right) / \left(\left(fE*28.06\right)+\left(\left(1-fE\right)*42.08\right)\right)$

### Bibliographic references:

1) Busico, V., Cipullo, R., Prog. Polym. Sci. 26 (2001) 443.
2) Busico, V., Cipullo, R., Monaco, G., Vacatello, M., Segre, A.L., Macromolecules 30 (1997) 6251.
3) Zhou, Z., Kuemmerle, R., Qiu, X., Redwine, D., Cong, R., Taha, A., Baugh, D. Winniford, B., J. Mag. Reson. 187 (2007) 225.
4) Busico, V., Carbonniere, P., Cipullo, R., Pellecchia, R., Severn, J., Talarico, G., Macromol. Rapid Commun. 2007, 28, 1128.
5) Resconi, L., Cavallo, L., Fait, A., Piemontesi, F., Chem. Rev. 2000, 100, 1253.
6) Wang, W-J., Zhu, S., Macromolecules 33 (2000), 1157.
7) Cheng, H. N., Macromolecules 17 (1984), 1950.
8) Singh, G., Kothari, A., Gupta, V., Polymer Testing 28 5 (2009), 475.
9) Kakugo, M., Naito, Y., Mizunuma, K., Miyatake, T. Macromolecules 15 (1982) 1150.
10) Randall, J. Macromol. Sci., Rev. Macromol. Chem. Phys. 1989, C29, 201.
11) Resconi, L., Cavallo, L., Fait, A., Piemontesi, F., Chem. Rev. 2000, 100, 1253.

### c) Differential scanning calorimetry (DSC) analysis, melting temperature (Tm) and crystallization temperature (Tc):

measured with a TA Instrument Q2000 differential scanning calorimetry (DSC) on 5 to 7 mg samples. DSC is run according to ISO 11357 / part 3 /method C2 in a heat / cool /heat cycle with a scan rate of 10°C/min in the temperature range of -30°C to +225°C.

Crystallization temperature and heat of crystallization (Hc) are determined from the cooling step, while melting temperature and heat of fusion (Hf) are determined from the second heating step.

When a sample shows two or more melting temperatures and/or crystallization temperatures only the main melting temperature (at the highest Hc) and main crystallization temperature (at the highest Hf) are displayed in the accordant table. The difference of melting temperature and crystallization temperature (Tm-Tc) is given for the maim melting temperature and the main crystallization temperature.

### d) Xylene cold solubles (XCS) content

The quantity of xylene soluble matter in polypropylene is detemined according to the ISO16152 (first edition; 2005-07-01).

A weighed amount of a sample is dissolved in hot xylene under reflux conditions at 135°C. The solution is then cooled down under controlled conditions and maintained at 25°C for 30 minutes to ensure controlled crystallization of the insoluble fraction. This insoluble fraction is then separated by filtration. Xylene is evaporated from the filtrate leaving the soluble fraction as a residue. The percentage of this fraction is determined gravimetrically. $%XS = \frac{{m}_{1} \times {ν}_{0}}{{m}_{0} \times {ν}_{1}} \times 100$ where
m₀ is the mass of the sample test portion weighed, in grams
m₁ is the mass of residue, in grams
v₀ is the original volume of solvent taken
v_{1 i}s the volume of the aliquot taken for determination.

### e) Intrinsic viscosity (iV)

The reduced viscosity (also known as viscosity number), η_{red}, and intrinsic viscosity, [η], are determined according to ISO 1628-3: "Determination of the viscosity of polymers in dilute solution using capillary viscometers".

Relative viscosities of a diluted polymer solution with concentration of 1 mg/ml and of the pure solvent (decahydronaphthalene stabilized with 200 ppm 2,6-bis(1,1-dimethylethyl)-4-methylphenol) are determined in an automated capillary viscometer (Lauda PVS1) equipped with 4 Ubbelohde capillaries placed in a thermostatic bath filled with silicone oil. The bath temperature is maintained at 135 °C. The sample is dissolved with constant stirring until complete dissolution is achieved (typically within 90 min). The efflux time of the polymer solution as well as of the pure solvent are measured several times until three consecutive readings do not differ for more than 0.2s (standard deviation).

The relative viscosity of the polymer solution is determined as the ratio of averaged efflux times in seconds obtained for both, polymer solution and solvent: ${η}_{rel} = \frac{{t}_{solutiom} - {t}_{solvent}}{{t}_{solvent}} \left[dimensionless\right]$

Reduced viscosity (η_{red}) is calculated using the equation: ${η}_{red} = \frac{{t}_{solution} - {t}_{solvent}}{{t}_{solvent} * C} \left[dl/g\right]$
where C is the polymer solution concentration at 135°C: $C = \frac{m}{Vγ}$,
and m is the polymer mass, *V* is the solvent volume, and y is the ratio of solvent densities at 20°C and 135°C (γ=ρ₂₀/ρ₁₃₅=1.107).

The calculation of intrinsic viscosity iV is performed by using the Schulz-Blaschke equation from the single concentration measurement: $iV = \frac{{η}_{red}}{1 + K + C + {η}_{red}}$ where K is a coefficient depending on the polymer structure and concentration. For calculation of the approximate value for iV, K=0.27.

### f) Molecular weight averages, polydispersity (Mn, Mw, Mz, MWD) by GPC-analysis (GPC)

For the GPC analysis the column set was calibrated using universal calibration (according to ISO 16014-2:2003) with 19 narrow MWD polystyrene (PS) standards in the range of 0.5 kg/mol to 11 500 kg/mol. The PS standards were dissolved at 160°C for 15 min or alternatively at room temperatures at a concentration of 0.2 mg/ml for molecular weight higher and equal 899 kg/mol and at a concentration of 1 mg/ml for molecular weight below 899 kg/mol. The conversion of the polystyrene peak molecular weight to polyethylene molecular weights is accomplished by using the Mark Houwink equation and the following Mark Houwink constants: ${K}_{PS} = 19 \times {10}^{- 3} ml / g , {α}_{PS} = 0.655$ ${K}_{PE} = 39 \times {10}^{- 3} ml / g , {α}_{PE} = 0.725$

A third order polynomial fit was used to fit the calibration data.

Molecular weight averages (Mz, Mw and Mn), Molecular weight distribution (MWD) and its broadness, described by polydispersity index, PD= Mw/Mn (wherein Mn is the number average molecular weight and Mw is the weight average molecular weight) were determined using the following formulas: ${M}_{n} = \frac{{\sum }_{i = 1}^{N} {A}_{i}}{\sum \left({A}_{i}/{M}_{i}\right)}$ ${M}_{w} = \frac{{\sum }_{i = 1}^{N} \left({A}_{i}\times {M}_{i}\right)}{\sum {A}_{i}}$ ${M}_{z} = \frac{{\sum }_{i = 1}^{N} \left({A}_{i}\times {M}_{i}^{2}\right)}{\sum \left({A}_{i}/{M}_{i}\right)}$

### g) Flexural Modulus

The flexural modulus was determined acc. to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection moulding was carried out according to ISO 19069-2 using a melt temperature of 230°C for all materials irrespective of material melt flow rate.

### h) Charpy notched impact strength

The Charpy notched impact strength was determined acc. to ISO 179-1/1eA on notched 80 mm × 10 mm × 4 mm specimens (specimens were prepared according to ISO 179-1/1eA). Testing temperatures were 23±2° C or -20±2° C. Injection moulding was carried out acc. to ISO 19069-2 using a melt temperature of 230°C for all materials irrespective of material melt flow rate.

### i) Density

The density is measured according to ISO 1183-1:2004 Method A on compression moulded specimen prepared according to EN IS0 1872-2 (Feb 2007) and is given in g/cm³.

### j) Tensile test

For the unfilled polymers the following procedure was used:
The tensile test (modulus, stress and strain at break and stress and strain at yield) is measured at 23°C according to ISO 527-1 (cross head speed 1 mm/min) using type 1A directly injection moulded test specimens according to ISO 527-2(1A). After preparation of the test specimen were prepared the polymer in the test specimens were rested at room temperature for 16 h or 96 h before testing to ensure that the polymer is fully crystallized. The accordant resting time is listed for each of the below listed properties.

For the semiconductive compositions comprising carbon black the tensile test was conducted on specimens obtained from tapes according to the following procedure: First pellets were extruded into a tape of around 0.6-0.7 mm thickness by use of a Collin Teach-Line E 20 T tape extruder using the following temperature settings: 60 °C (zone 1), 220 °C (zone 2), 220 °C (zone 3) and 220 °C (zone 4 to 6).

These tapes were then used to prepare a plaque by placing all the tapes in one direction and carrying out compression moulding according to ISO 19069-2 to produce a plaque of around 2 mm thickness.

5A specimens were then die cut from the plaque and conditioned for at least 96h at a constant temperature of 23C.

The tensile properties of the semicon materials (tensile strength, elongation at break) were determined acc. to ISO 527-1 using 5A (ISO 527-2) specimens.

Following the standard EN60811-501, a test speed of 25 mm/min was used.

A load cell recorded the change in force and an extensometer recorded the change in elongation.

### k) Volume resistivity (VR)

### VR measurement on tapes:

A tape of thickness 0.6-0.7 mm and 25 mm width was extruded with a Collin Teach-Line E 20 T tape extruder using the following temperature settings: 60 °C (zone 1) and 220 °C (zone 2 to 6). These tapes were then used to prepare a plaque by placing all the tapes in one direction and carrying out compression moulding according to ISO 19069-2 to produce a plaque of around 3 mm thickness.

The plaque was cut into 15 cm long specimens which were conditioned at 1 atm and 23 ± 2°C for at least 96 hours before measurement. A four-terminal electrode system as described in ISO 3915 (1999) was used to determine the resistance between the potential electrodes 10 mm apart. The resistance at elevated temperatures was determined 30 minutes after placing the assembly in the preheated oven. The volume resistivity was calculated from measured resistance and sample geometry using the formula in ISO 3915 (1999).

### VR measurement on cable specimens:

Cable specimens of length 13.5 cm were conditioned at 1 atm and 60 ± 2°C for 5 ± 0.5 hours before measurement. The measurement of the resistance of the outer semiconductive layer was based on IEC 60502-2 (2005) using a four-terminal system, but with metal wires pressed against the semiconductive layer instead of silver-painted electrodes. The distance between the two potential electrodes was 50 mm.

To measure the resistance of the inner semiconductive layer, the cable was cut in two halves, removing the metallic conductor. The resistance between conductive silver paste applied on the specimen ends was used to calculate the volume resistivity. It was thus a two-terminal method where the electrode distance is about 12 cm.

The resistance at elevated temperatures was determined 30 minutes after placing the assembly in the preheated oven.

The volume resistivity was calculated from measured resistance and sample geometry using the formula in IEC 60502-2 (2005).

### I) Ash content

Ash content is measured according to ASTM D4218-20, ISO6964 and IEC60811-605. The method describes how the carbon black content in polyolefin is measured by combustion in a microwave oven set to 600 °C. The sample weighting 1 g is weighed before and after the combustion and the ash content is calculated from the residue using the formula below. Two samples are prepared. $CB \left(wt%\right) = \left(M1-M2\right) \times 100 W CBwt% = \left(M1-M2\right) \times 100 / W$ with
M1 = Weight of the crusible, lid and sample residue after combustion (g)
M2 = Weight of the crusible and lid (g)
W = Sample weight before combustion (g).

### m) AQT

AQT is the moisture content measurement based on reaction with calcium hydride according to DIN EN ISO 15512. The sample is place into the analyzer and heated up to 200 C. The water content of the sample can be measured based on on reaction with Calcium hydride according to the formula below.

CaH₂ + 2 H₂O → Ca(OH)₂ + 2 H₂

### n) AC electric breakdown strength (ACBD)

The AC breakdown tests were performed in agreement with CENELEC HD 605 5.4.15.3.4 for 6/10 kV cables. The cable was thus cut into six test samples of 10 meter active length (terminations in addition). The samples were tested to breakdown with a 50 Hz AC step test at ambient temperature, according to the following procedure:
- Start at 18 kV for 5 minutes
- Voltage increasing in step of 6 kV every 5 minutes until breakdown occurs

The calculation of the Weibull parameters of the data set of six breakdown values (conductor stress, i.e. the electric field at the inner semiconductive layer) follows the least squares regression procedure as described in IEC 62539 (2007). The Weibull alpha parameter in this document refers to the scale parameter of the Weibull distribution, i.e. the voltage for which the failure probability is 0.632. The Weibull beta value refers to the shape parameter.

### 2. Polypropylene compositions

The following resins were used for the preparation of the polypropylene compositions used for the insulation layer and sued for preparing the semiconductive compositions for the inner and outer semiconductive layers:

### a) Polymerization of the heterophasic propylene copolymer powders A1 and A2

### • Catalyst

The catalyst used in the polymerization process for the heterophasic propylene copolymer powders, A1 and A2, was a Ziegler-Natta catalyst, which is described in patent publications EP491566, EP591224 and EP586390. As co-catalyst triethylaluminium (TEAL) and as donor dicyclo pentyl dimethoxy silane (D-donor) was used.

### • Polymerization of the heterophasic propylene copolymer powders

Heterophasic propylene copolymer powders, A1 and A2, were produced in a Borstar^{™} plant in the presence of the above described polymerization catalyst using one liquid-phase loop reactor and two gas phase reactors connected in series under conditions as shown in Table 1. The first reaction zone was a loop reactor and the second and third reaction zones were gas phase reactors. The matrix phase was polymerized in the loop and first gas phase reactor and the elastomeric phase was polymerized in the second gas phase reactor. The catalyst as described above was fed into a prepolymerization reactor, which precedes the first reaction zone.

**Table 1: Polymerization conditions of heterophasic propylene copolymer powders A1 and A2:**

| | | A1-powder | A2-powder |
|---|---|---|---|
| **Prepolymerization** | | | |
| TEAL/Ti ratio | [mol/mol] | 342 | 404 |
| Donor/Ti ratio | [mol/mol] | 26.9 | 27.1 |
| Temperature | [°C] | 19.9 | 20.0 |
| Residence time | [h] | 0.16 | 0.15 |

| **Loop** | | | |
|---|---|---|---|
| Temperature | [°C] | 70.0 | 70.0 |
| Pressure | [barg] | 55 | 55 |
| Split (Loop + Prepol) | [%] | 33.7 | 32.6 |
| H2/C3 ratio | [mol/kmol] | 5.5 | 5.0 |
| C2/C3 ratio | [mol/kmol] | 16.7 | 17.2 |
| MFR (230°C/2.16kg) | [g/10 min] | 6.5 | 5.4 |
| C2 content (calc.) | [wt%] | 2.0 | 2.0 |

| **GPR 1** | | | |
|---|---|---|---|
| Temperature | [°C] | 74.9 | 74.9 |
| Pressure | [barg] | 21.0 | 21.1 |
| Split (GPR1) | [%] | 48.2 | 47.8 |
| H2/C3 ratio | [mol/kmol] | 21.3 | 19.3 |
| C2/C3 ratio | [mol/kmol] | 53.4 | 58.0 |
| MFR (230°C/2.16kg) | [g/10 min] | 1.3 | 1.3 |
| C2 content (calc.) | [wt%] | 6.5 | 6.6 |

| **GPR 2** | | | |
|---|---|---|---|
| Temperature | [°C] | 79.99 | 79.96 |
| Pressure | [barg] | 16.03 | 14.97 |
| Split (GPR2) | [%] | 18.2 | 19.5 |
| C2/C3 ratio | [mol/kmol] | 401 | 432 |
| H2/C3 ratio | [mol/kmol] | 69 | 76 |
| MFR (230°C/2.16kg) | [g/10 min] | 1.2 | 1.1 |
| XCS | [wt%] | 35.3 | 39.2 |
| C2 (content calc.) | [wt%] | 10.5 | 11.3 |

### b) Preparation of the polypropylene compositions RE1 and RE2

The heterophasic propylene copolymer powders A1 and A2 from the polymerization reaction were compounded in a twin screw extruder together with different stabilizer packages to obtain the polypropylene compositions RE1 and RE2.

Depending on the accordant polypropylene composition different alpha-nucleating agents were added.

The polypropylene composition RE1 and RE2 were both vis-broken to a melt flow rate MFR₂ (230°C, 2.16 kg) of 3.8-3.9 g/10 min as disclosed in the example section of WO 2017/198633.

An overview of the production of the polypropylene compositions RE1 and RE2 are shown in Table 2.

**Table 2: Compounding of RE1 and RE2 in a twin screw extruder:**

| | | RE1 | RE2 |
|---|---|---|---|
| HECO-powder | | A1 | A2 |
| Visbreaking | | yes | yes |
| Stabiliser onepack 1 | [wt.-%] | 0.14 | - |
| Stabiliser onepack 2 with alpha-NA DMDBS | [wt.-%] | - | 0.38 |
| Alpha-NA BNT | [wt.-%] | 2.0 | - |
| Temperature ranges of extruder zones | [°C] | 150-280 | 140-280 |
| Specific Energy Input (SEI) | kWh/kg | 0.146 | 0.147 |
| Polymer melt temp. at melt pump | [°C] | 231 | 234 |

Stabilizer packages and additives:
- Stabiliser onepack 1 consists of 29 wt.-% Pentaerythrityl-tetrakis(3-(3',5'-di-tert. butyl-4-hydroxyphenyl)-propionate (CAS-No. 6683-19-8), 58 wt.-% Tris (2,4-di-*t-*butylphenyl) phosphite (CAS-No. 31570-04-4) and 13 wt.-% Magnesium Oxide (CAS-No. 1309-48-4), all commercially available from a variety of companies.
- Stabiliser onepack 3 consists of 15.6 wt.-% Pentaerythrityl-tetrakis(3-(3',5'-di-tert. butyl-4-hydroxyphenyl)-propionate (CAS-No. 6683-19-8), 15.6 wt.-% Tris (2,4-di-*t-*butylphenyl) phosphite (CAS-No. 31570-04-4), 15.6 wt.-% Calcium stearate (CAS-No. 1592-23-0) and 53.2 wt.-% alpha-nucleating agent 1,3 : 2,4 Bis(3,4-dimethylbenzylidene) sorbitol (DMDBS, CAS-No. 135861-56-2), all commercially available from a variety of companies.
- Alpha-nucleation via BNT was achieved by adding 2 wt.-% of a propylene homopolymer with an MFR₂ (230°C) of 8.0 g/10 min and a melting temperature of 162 °C, which is produced with a Ziegler-Natta type catalyst in the Borealis nucleation technology (BNT), comprising a polymeric α-nucleating agent, and is distributed by Borealis AG (Austria).

The properties of polypropylene compositions RE1 and RE2 are listed below in Table 3:

**Table 3: Properties of RE1 and RE2**

| | | RE1 | RE2 |
|---|---|---|---|
| HECO powder | | A1 | A2 |
| alpha-NA | | BNT | DMDBS |
| MFR₂ | [g/10 min] | 3.9 | 3.8 |
| Flexural modulus | [MPa] | 378 | 351 |
| Charpy NIS (-20°C) | [kJ/m²] | 4.2 | 6.8 |
| Charpy NIS (23°C) | [kJ/m²] | 78.9 | 79.2 |
| Tm | [°C] | 147.4 | 149.2 |
| Tc | [°C] | 114.5 | 119.5 |
| Tm-Tc | [°C] | 32.9 | 29.7 |
| C2 (total) | [wt.-%] | 11.3 | 13.6 |
| iV (total) | [cm³/g] | 213 | n.m. |
| XCS fraction | [wt.-%] | 35.6 | 40.3 |
| C2 (XCS) | [wt.-%] | 24.5 | 26.0 |
| iV (XCS) | [cm³/g] | 189 | 202 |
| Mw (XCS) | [g/mol] | 215,000 | 219,000 |
| Mn (XCS) | [g/mol] | 48,900 | 44,850 |
| PDI (Mw/Mn) (XCS) | [-] | 4.4 | 4.9 |
| XCI fraction | [wt.-%] | 64.4 | 59.7 |
| C2 (XCI) | [wt.-%] | 5.8 | 6.6 |
| iV (XCI) | [cm³/g] | 216 | 212 |
| Mw (XCI) | [g/mol] | 271,000 | 271,500 |
| Mn (XCI) | [g/mol] | 62,000 | 60,050 |
| PDI (Mw/Mn) (XCI) | [-] | 4.4 | 4.5 |
| iV ratio (XCI/XCS) | [-] | 1.14 | 1.05 |
| C2 ratio (XCS/XCI) | [-] | 4.22 | 3.94 |
| Mw ratio (XCI/XCS) | [-] | 1.26 | 1.24 |

### c) Insulation composition

### Polypropylene composition RE2 was used as insulation composition for the production the insulation layer IL of 10 kV pilot cables as disclosed below.

### d) Semiconductive compositions

Semiconductive compositions SC1 and SC2 using polypropylene composition RE1 were produced for the production the semiconductive layer SL1 and SL2 of 10 kV pilot cables as disclosed below.

RE1 was compounded with carbon black and optionally the dielectric fluid in different amounts using a X-Compound continuous kneader CK 45 to semiconductive compositions SC1 and SC2. The amounts of the different components in the semiconductive compositions are listed below in Table 4.

Carbon black (CB) was Printex Alpha, commercially available from Orion Engineered Carbons GmbH.

The dielectric fluid (DF) was dibenzyltoluene, commercially available as Marlotherm SH from Sasol Germany GmbH.

**Table 4: Compositions and properties of SC1 and SC2**

| | | SC1 | SC2 |
|---|---|---|---|
| **Composition** | | | |
| RE1 | [wt.-%] | 70.0 | 65.0 |
| DF | [wt.-%] | - | 5.0 |
| CB | [wt.-%] | 30.0 | 30.0 |

| **Properties** | | | |
|---|---|---|---|
| MFR₁₀ | [g/10 min] | 9.4 | 18.1 |
| MFR₂₁ | [g/10 min] | 88.0 | 153.1 |
| Ash | [%] | 29.4 | 28.7 |
| Volume resistivity | [Ohm·cm] | 4.1 | 5.1 |
| QC extruder | [bar] | 123 | 99 |
| Visible pips | [psc/m] | 27 | 25 |
| Density | [g/cm³] | 1.039 | 1.043 |
| Tensile strength after 16 h | [MPa] | 13.0 | 10.8 |
| Elongation at break after 16 h | [%] | 526 | 59.9 |
| AQT 105°C | [ppm] | 299 | 346 |

### 3. Production of 10 kV cables

10 kV test cables were produced on a Maillefer pilot cable line of catenary continuous vulcanizing (CCV) type.

### The conductors of the cable cores had a cross section being 50 mm² of stranded aluminium. The inner semiconductive layer was produced from the above described semiconductive compositions SC1 or SC2 and had a thickness of 1.0 mm. The insulation layer was produced from the above described insulation composition RE1, and had a thickness of 3.4 mm. The outer semiconductive layer was produced from the above described semiconductive compositions SC1 or SC2 and had a thickness of 1.0 mm.

The cables, i.e. cable cores, were produced by extrusion via a triple head. The insulation extruder had size 100 mm, the extruder for conductor screen (inner semiconductive layer) 45 mm, and the extruder for insulation screen (outer semiconductive layer) 60 mm. The line speed was 6.0 m/min.

The vulcanisation tube had a total length of 52.5 meter consisting of a curing section followed by a cooling section. The curing section was filled with N₂ at 10 bar but not heated. The 33-meter-long cooling section was filled with 20-25°C water.

The pilot cables were then subjected to AC breakdown testing.

Table 5 shows the composition and electric properties of the 10 kV cables of example C1 and C2

**Table 5: Electric properties of 10 kV cables of C1 and C2**

| | C1 | C2 |
|---|---|---|
| Insulation layer | RE1 | RE1 |
| Inner semiconductive layer | SC1 | SC2 |
| Outer semiconductive layer | SC1 | SC2 |
| Weibull-alpha (scale) [kV/mm] | 45.8 | 49.1 |
| Weibull-beta (shape) | 14.0 | 8.4 |

The test cable C2 including the semiconductive composition SC2 including dielectric fluid in the inner and outer semiconductive layers shows a higher Weibull-alpha value and at acceptable Weibull-beta value compared to test cable C1 including the semiconductive composition SC2 without dielectric fluid in the inner and outer semiconductive layers.

The higher Weibull-alpha values were surprisingly obtained without introducing dielectric fluid into the insulation layer.

## Claims

1. A power cable comprising a conductor, an inner semiconductive layer, an insulation layer and an outer semiconductive layer, obtainable by a process comprising the following steps:
a) preparing a semiconductive polypropylene composition (S-PP), which comprises
from 45.0 to 80.0 wt.-%, preferably from 50.0 to 75.0 wt.-%, more preferably from 55.0 to 70.0 wt.-%, of a first heterophasic copolymer of propylene and ethylene (HECO1) having
• a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
• a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the heterophasic copolymer of propylene and ethylene (HECO1), wherein
• said xylene cold soluble (XCS) fraction has an intrinsic viscosity of from 100 to 350 cm³/g, preferably from 130 to 325 cm³/g, most preferably from 150 to 300 cm³/g, measured according to ISO 1628-3 at 135°C in decalin;
from 5.0 to 40.0 wt.-%, preferably from 10.0 to 37.5 wt.-%, more preferably from 15.0 to 35.0 wt.-%, of carbon black; and
from 1.0 to 15.0 wt.-%, preferably from 2.5 to 12.5 wt.-%, more preferably from 3.5 to 10.0 wt.-%, of a dielectric fluid comprising at least one alkylaryl hydrocarbon having the structural formula (I) 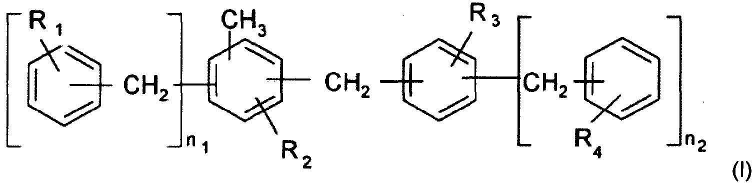 wherein
R₁, R₂, R₃ and R₄, equal or different are independently hydrogen or methyl;
n₁ and n₂, equal or different, are 0, 1 or 2, with the proviso that the sum n₁ + n₂ is less than or equal to 3;
wherein all weight percentages are based on the total weight of the semiconductive composition (S-PP);
b) preparing a polypropylene composition (I-PP), which comprises a second heterophasic copolymer of propylene and ethylene (HECO2), wherein the polypropylene composition (I-PP) has
• a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
• a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), wherein
• said xylene cold soluble (XCS) fraction has an ethylene content, determined by quantitative ¹³C{¹H} nuclear-magnetic resonance (NMR) spectroscopy, of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction;
**characterized in that** the polypropylene composition (I-PP) is free of a dielectric fluid;
c) coating the conductor with an inner semiconductive layer comprising the semiconductive polypropylene composition (S-PP);
d) coating the inner semiconductive layer with an insulation layer comprising the polypropylene composition (I-PP); and
e) coating the insulation layer with an outer semiconductive layer comprising the semiconductive polypropylene composition (S-PP).

2. The power cable according to claim 1, wherein the dielectric fluid comprises dibenzyltoluene.

3. The power cable according to claims 1 or 2, wherein the dielectric fluid has one or more or all of the following properties:
• a viscosity, determined according to DIN 51562 at 20°C of from 15 to 60 mm²/s, preferably from 25 to 57 mm²/s, more preferably from 30 to 55 mm²/s;
• a viscosity, determined according to DIN 51562 at 200°C of from 0.80 to 1.00 mm²/s, preferably from 0.83 to 0.97 mm²/s, more preferably from 0.85 to 0.95 mm²/s;
• a viscosity, determined according to DIN 51562 at 220°C of from 0.65 to 0.90 mm²/s, preferably from 0.67 to 0.87 mm²/s, more preferably from 0.70 to 0.85 mm²/s;
• a density, determined according to DIN 51562 at 20°C of from 0.95 to 1.15 g/ml, preferably from 0.98 to 1.13 g/ml, more preferably from 1.00 to 1.10 g/ml.

4. The power cable according to any one of the preceding claims, wherein the first heterophasic copolymer of propylene and ethylene (HECO1) has one or more or all of the following properties:
• a total amount of ethylene comonomer units, determined by quantitative ¹³C{¹H} nuclear-magnetic resonance (NMR) spectroscopy, of from 7.5 to 20.0 wt.-%, preferably from 9.0 to 17.5 wt.-%, most preferably from 10.0 to 15.0 wt.-%, based on the total amount of monomer units of the first heterophasic copolymer of propylene and ethylene (HECO1);
• a total intrinsic viscosity of from 150 to 350 cm³/g, preferably from 170 to 325 cm³/g, most preferably from 200 to 300 cm³/g, measured according to ISO 1628-3 at 135°C in decalin;
• a fraction insoluble in cold xylene (XCI), determined according to the ISO 16152, in an amount of from 50.0 to 75.0 wt.-%, more preferably from 52.5 to 70.0 wt.-%, most preferably from 55.0 to 67.5 wt.-%, based on the total weight amount of the first heterophasic copolymer of propylene and ethylene (HECO1);
• the fraction insoluble in cold xylene (XCI) has an amount of ethylene, determined by quantitative ¹³C{¹H} nuclear-magnetic resonance (NMR) spectroscopy, of from 2.5 to 12.5 wt.-%, preferably from 3.5 to 10.0 wt.-%, most preferably from 4.5 to 8.5 wt.-%, based on the total amount of monomer units in the fraction insoluble in cold xylene (XCI) of the heterophasic copolymer of propylene and ethylene (HECO1);
• the fraction insoluble in cold xylene (XCI) has an intrinsic viscosity of from 130 to 380 cm³/g, preferably from 150 to 350 cm³/g, most preferably from 180 to 325 cm³/g, measured according to ISO 1628-3 at 135°C in decalin;
• the xylene cold soluble (XCS) fraction has an amount of ethylene, determined by quantitative ¹³C{¹H} nuclear-magnetic resonance (NMR) spectroscopy, of from 20.0 to 35.0 wt.-%, preferably from 22.5 to 32.5 wt.-%, most preferably from 23.0 to 31.0 wt.-%, based on the total amount of monomer units in the xylene cold soluble (XCS) fraction of the first heterophasic copolymer of propylene and ethylene (HECO1);
• a melting temperature Tm of from 140 to 159°C, preferably from 142 to 155°C, most preferably from 145 to 153°C, determined by differential scanning calorimetry according to ISO 11357 / part 3 /method C2;
• a crystallization temperature Tc of from 85 to 125°C, preferably from 88 to 122°C, most preferably from 90 to 120°C, determined by differential scanning calorimetry according to ISO 11357 / part 3 /method C2;
• a flexural modulus of from 130 MPa to 425 MPa, more preferably of from 150 to 400 MPa and most preferably of from 175 to 390 MPa, determined according to ISO 178 method A on 80 mm × 10 mm × 4 mm specimens;
• a Charpy notched impact strength at 23°C of from 40 to 110 kJ/m², more preferably from 50 to 100 kJ/m² and most preferably from 55 to 95 kJ/m², determined according to ISO 179-1/1eA on notched 80 mm × 10 mm × 4 mm specimens.

5. The power cable according to any one of the preceding claims, wherein the semiconductive polypropylene composition (S-PP) is free of 2,2,4-trimethyl-1,2-dihydroquinoline (TMQ).

6. The power cable according to any one of the preceding claims, wherein the semiconductive polypropylene composition (S-PP) comprises from 0 to 5.0 wt.-%, preferably from 0 to 2.5 wt.-%, more preferably from 0 to 1.0 wt.-%, based on the total weight of the semiconductive polypropylene composition (S-PP), of a polyolefin functionalized with a mono- or polycarboxylic acid compound or a derivative of a mono- or polycarboxylic acid compound, wherein the functionalized polyolefin is different from the first heterophasic copolymer of propylene and ethylene (HECO1).

7. The power cable according to any one of the preceding claims, wherein the semiconductive polypropylene composition (S-PP) has
• a melt flow rate MFR₁₀, determined according to ISO 1133 at 230°C and 10 kg, of from 1.0 to 50.0 g/10 min, preferably from 5.0 to 40.0 g/10 min, most preferably from 10.0 to 30.0 g/10 min; and/or
• a volume resistivity (VR) of from 1.0 to 50.0 Ohm-cm, preferably from 1.5 to 40.0 Ohm·cm, most preferably from 2.0 to 30.0 Ohm·cm, when measured at 23°C on tape specimens of 1mm x 100 mm x 15 mm.

8. The power cable according to any one of the preceding claims, wherein the polypropylene composition (I-PP) comprises the second heterophasic copolymer of propylene and ethylene (HECO2) in an amount of from 90.0 to 99.999999 wt.-%, more preferably from 92.5 to 99.9 wt.-% and most preferably from 95.0 to 99.8 wt.-%, based on the total amount of the polypropylene composition (I-PP).

9. The power cable according to any one of the preceding claims, wherein the polypropylene composition (I-PP) an alpha-nucleating agent.

10. The power cable according to claim 9, wherein the polypropylene composition (I-PP) comprises the alpha-nucleating agent in an amount of from 0.000001 to 5.00 wt.-%, more preferably from 0.00001 to 2.50 wt.-%, based on the total amount of the polypropylene composition (I-PP).

11. The power cable according to any one of the preceding claims, wherein the polypropylene composition (I-PP) has one or more or all of the following properties:
• a total ethylene content, determined by quantitative ¹³C{¹H} nuclear-magnetic resonance (NMR) spectroscopy, of from 10.0 to 16.0 wt.-%, preferably from 10.5 to 15.0 wt.-%, most preferably from 11.0 to 14.0 wt.-%, based on the total amount of monomer units in the polypropylene composition (I-PP);
• a total intrinsic viscosity of from 185 to 350 cm³/g, preferably from 200 to 325 cm³/g and most preferably from 210 to 300 cm³/g, measured according to ISO 1628-3 at 135°C in decalin;
• a fraction insoluble in cold xylene (XCI), determined according to the ISO 16152, in a total amount of from 50.0 to 75.0 wt.-%, preferably from 55.0 to 72.5 wt.-%, more preferably from 57.5 to 70.0 wt.-% and most preferably from 59.0 to 67.5 wt.-%, based on the total weight amount of the polypropylene composition (I-PP);
• the fraction insoluble in cold xylene (XCI) has an amount of ethylene, determined by quantitative ¹³C{¹H} nuclear-magnetic resonance (NMR) spectroscopy, of from 3.0 to 9.0 wt.-%, more preferably from 4.0 to 8.5 wt.-% and most preferably from 4.5 to 7.5 wt.-%, based on the total amount of monomer units in the fraction insoluble in cold xylene (XCI);
• the fraction insoluble in cold xylene (XCI) has an intrinsic viscosity of from 185 to 350 cm³/g, preferably from 220 to 325 cm³/g and most preferably from 210 to 300 cm³/g, measured according to ISO 1628-3 at 135°C in decalin;
• the xylene cold soluble (XCS) fraction preferably has an intrinsic viscosity of from 150 to 350 cm³/g, preferably from 165 to 325 cm³/g and most preferably from 175 to 300 cm³/g, measured according to ISO 1628-3 at 135°C in decalin;
• a melting temperature Tm of from 140 to 159°C, preferably from 143 to 157°C and most preferably from 145 to 153°C, determined by differential scanning calorimetry according to ISO 11357 / part 3 /method C2;
• a crystallization temperature Tc of from 105 to 130°C, preferably from 107 to 128°C and most preferably from 110 to 125°C, determined by differential scanning calorimetry according to ISO 11357 / part 3 /method C2;
• a flexural modulus of not more than 470 MPa, such as from 200 to 470 MPa, preferably from 250 to 450 MPa and most preferably from 300 to 430 MPa, determined according to ISO 178 method A on 80 mm × 10 mm × 4 mm specimens;
• a Charpy notched impact strength at 23°C of at least 70.0 kJ/m², such as from 70.0 to 100.0 kJ/m², more preferably from 72.5 to 95.0 kJ/m² and most preferably from 75.0 to 90.0 kJ/m², determined according to ISO 179-1/1eA on notched 80 mm × 10 mm × 4 mm specimens;
• a Charpy notched impact strength at -20°C of at least 3.5 kJ/m², such as from 3.5 to 10.0 kJ/m², more preferably from 3.7 to 9.0 kJ/m² and most preferably from 4.0 to 8.0 kJ/m², determined according to ISO 179-1/1eA on notched 80 mm × 10 mm × 4 mm specimens.

12. The power cable according to any one of the preceding claims being a medium voltage power cable or high voltage power cable.

13. The power cable according to any one of the preceding claims having
• a Weibull alpha-value of at least 35 kV/mm, such as from 35.0 to 65.0 kV/mm, preferably from 40.0 to 65.0 kV/mm and most preferably from 45.0 to 65.0 kV/mm and/or
• a Weibull beta-value of at least 7.5, such as from 7.5 to 250.0, preferably from 8.0 to 250.0, most preferably from 8.2 to 250.0,
all measured in agreement with CENELEC HD 605 5.4.15.3.4 for 6/10 kV cables on a 10 kV cable.

14. A process for producing a power cable comprising the following steps:
a) preparing a semiconductive polypropylene composition (S-PP), which comprises
from 45.0 to 80.0 wt.-%, preferably from 50.0 to 75.0 wt.-%, more preferably from 55.0 to 70.0 wt.-%, of a first heterophasic copolymer of propylene and ethylene (HECO1) having
• a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
• a xylene cold soluble (XCS) fraction, determined according to the ISO 16152, in a total amount of from 25.0 to 50.0 wt%, preferably from 30.0 to 47.5 wt%, most preferably from 32.5 to 45.0 wt%, based on the total weight amount of the heterophasic copolymer of propylene and ethylene (HECO1), wherein
• said xylene cold soluble (XCS) fraction has an intrinsic viscosity of from 100 to 350 cm³/g, preferably from 130 to 325 cm³/g, most preferably from 150 to 300 cm³/g, measured according to ISO 1628-3 at 135°C in decalin;
from 5.0 to 40.0 wt.-%, preferably from 10.0 to 37.5 wt.-%, more preferably from 15.0 to 35.0 wt.-%, of carbon black; and
from 1.0 to 15.0 wt.-%, preferably from 2.5 to 12.5 wt.-%, more preferably from 3.5 to 10.0 wt.-%, of a dielectric fluid comprising at least one alkylaryl hydrocarbon having the structural formula (I) 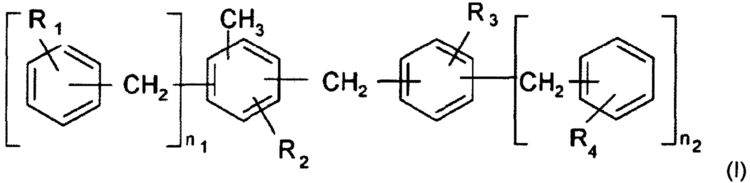 wherein
R₁, R₂, R₃ and R₄, equal or different are independently hydrogen or methyl;
n₁ and n₂, equal or different, are 0, 1 or 2, with the proviso that the sum n₁ + n₂ is less than or equal to 3;
wherein all weight percentages are based on the total weight of the semiconductive composition (S-PP);
b) preparing a polypropylene composition (I-PP), which comprises a second heterophasic copolymer of propylene and ethylene (HECO2), wherein the polypropylene composition (I-PP) has
• a melt a melt flow rate MFR₂, determined according to ISO 1133 at 230°C and 2.16 kg, of from 0.5 to 10.0 g/10 min, preferably from 0.7 to 7.5 g/10 min, most preferably from 1.0 to 5.0 g/10 min;
• a xylene cold soluble (XCS) fraction, determined according to the ISO 16152, in a total amount of from 25.0 to 50.0 wt.-%, preferably from 30.0 to 47.5 wt.-%, most preferably from 32.5 to 45.0 wt.-%, based on the total weight amount of the polypropylene composition (I-PP), wherein
• said xylene cold soluble (XCS) fraction has an ethylene content, determined by quantitative ¹³C{¹H} nuclear-magnetic resonance (NMR) spectroscopy, of at least 23.0 wt.-%, such as 23.0 to 35.0 wt.-%, preferably from 23.5 to 32.5 wt.-% and most preferably from 24.0 to 30.0 wt.-%, based on the total amount of monomer units in the xylene cold soluble (XCS) fraction;
**characterized in that** the polypropylene composition (I-PP) is free of a dielectric fluid;
c) coating the conductor with an inner semiconductive layer comprising the semiconductive polypropylene composition (S-PP);
d) coating the inner semiconductive layer with an insulation layer comprising the polypropylene composition (I-PP); and
e) coating the insulation layer with an outer semiconductive layer comprising the semiconductive polypropylene composition (S-PP).

15. The use of a dielectric fluid comprising at least one alkylaryl hydrocarbon having the structural formula (I) 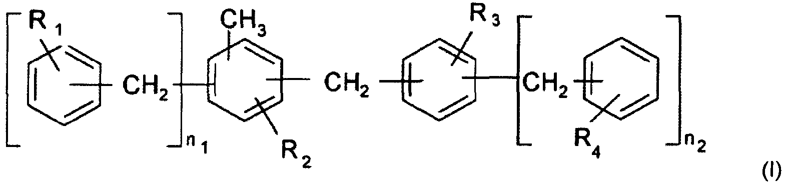 wherein
R₁, R₂, R₃ and R₄, equal or different, are independently hydrogen or methyl;
n₁ and n₂, equal or different, are 0, 1 or 2, with the proviso that the sum n₁ + n₂ is less than or equal to 3,
in the semiconductive composition (S-PP) for increasing the Weibull alpha-value of the power cable according to any one of the preceding claims to a value of at least 35 kV/mm, such as from 35.0 to 65.0 kV/mm, preferably from 40.0 to 65.0 kV/mm and most preferably from 45.0 to 65.0 kV/mm, measured in agreement with CENELEC HD 605 5.4.15.3.4 for 6/10 kV cables on a 10 kV cable.
